(19)

**Europäisches Patentamt**
**European Patent Office**
**Office européen des brevets**

(11) **EP 4 764 405 A1**

(12) **EUROPEAN PATENT APPLICATION**

(43) Date of publication:
**24.06.2026 Bulletin 2026/26**

(21) Application number: **24220500.3**

(22) Date of filing: **17.12.2024**

(51) International Patent Classification (IPC):
**G01C 15/06** (2006.01)   **G01C 21/16** (2006.01)
**G01C 25/00** (2006.01)

(52) Cooperative Patent Classification (CPC):
**G01C 15/06; G01C 21/165; G01C 25/005**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Trimble Inc**
**Westminster CO 80021 (US)**

(72) Inventor: **Görcke, Lorenz**
**München (DE)**

(74) Representative: **Hoffmann Eitle**
**Patent- und Rechtsanwälte PartmbB**
**Arabellastraße 30**
**81925 München (DE)**

(54) **ORIENTATION ESTIMATION AND POSE PARAMETERS ESTIMATION METHODS AND SYSTEMS**

(57)     Some embodiments of the invention pertain to methods for orientation estimation or at least for generating information based on which orientation estimation can be derived, and to methods for pose parameters estimation or at least for generating information based on which pose parameters estimation can be derived. The methods may comprise operating an IMU (120, 220), operating a sensor (160, 260) and/or acquiring an initial estimate (170, 270), operating an external gyroscope (180) or external accelerometer (280) if available and activated, and operating an estimator (140, 240) using state variables with values computed based on information provided thereto. Data from the external gyroscope (180) or accelerometer (280) may be provided as a data stream that need not be synchronized in time with provided IMU-based information. Systems, vehicles, survey poles, computer programs, and computer program products for using and/or carrying out such methods are also disclosed, among other things and features.

Fig. 4

EP 4 764 405 A1

**Description**

**[Field of technology]**

The invention relates to, without being limited to, the field of navigation. More specifically, the fields of application of the disclosed methods, systems, and computer programs include, but are not limited to, orientation and/or pose parameters determination, machine guidance, vehicle auto-steering, land surveying, mapping, civil engineering, construction, agriculture, disaster prevention and relief, and scientific research.

**[Background]**

Some aided inertial navigation systems (AINS) combine data from an inertial measurement unit (IMU) with aiding data from other types of sensors or equipment to enhance navigational accuracy, reliability, and/or stability. An AINS may undergo ongoing corrections to its inertial navigator mechanization to constrain the growth in inertial navigation errors. The AINS may use an error estimator to estimate INS errors and some means of INS error control to correct the INS errors. A so-called closed-loop AINS may use the estimated INS errors from the error estimator to correct the inertial navigator mechanization integrators. This causes the INS alignment to be continuously corrected.

In that context, using low-cost MEMS-based IMUs is possible. These IMUs are generally relatively small and hence relatively light, but they may show a relatively high sensor drift over time, which in turn leads to a limited accuracy as a result of the accumulation over time of measurement errors. Alternatively, high-performance IMUs may be used for more accurate propagation of position and orientation information, as these IMUs tend to show reduced sensor drift over time. High-performance IMUs may also offer a higher dynamic range, i.e. they may accurately capture a broader range of motions. However, high-performance IMUs tend to be relatively large and heavy, and they also tend to consume more power than low-cost MEMS-based IMUs, which may be important especially, but not only, for battery-powered IMUs.

There is a constant need for improving navigation techniques, so as to notably increase accuracy, precision, and reliability of the results, while at the same time keeping equipment costs, size, and power consumption as low as possible.

**[Summary]**

The present invention aims at addressing, at least in part, the above-mentioned need. The invention includes methods, systems, computer programs, computer program products, and storage mediums as defined in the independent claims. Particular embodiments are defined in the dependent claims.

In a first embodiment, a method is provided for orientation estimation or at least for generating information based on which orientation estimation can be derived. The method comprises the following: An IMU is operated for providing information about heading change of a rigid body, the information being here referred to as "IMU-based heading change information". At least one of the following is performed: (i) operating a sensor for at least intermittently providing one of: (i.1) information about heading of the rigid body, and (i.2) information usable, in combination with measurements from the IMU, to estimate heading of the rigid body; and (ii) acquiring an initial estimate of one of: (ii.1) heading of the rigid body, and (ii.2) a parameter or parameters usable, in combination with measurements from the IMU, to estimate heading of the rigid body. Whether a gyroscope, here referred to as "external gyroscope", for providing further information about heading change of the rigid body is available and activated is determined, wherein the further information is here referred to as "additional heading change information" and is provided as a data stream that need not be synchronized in time with the IMU-based heading change information. The external gyroscope is operated if available and activated. An estimation process, here referred to as "estimator", is operated, wherein the estimator uses state variables and computes the values of its state variables based on (a) the IMU-based heading change information; (b) at least one of: (b.1) data from the sensor, and (b.2) the initial estimate; and, (c) if the external gyroscope is available and activated, the additional heading change information.

In a second embodiment, a method is provided for pose parameters estimation or at least for generating information based on which pose parameters estimation can be derived, wherein the pose parameters comprise at least one of: (a) a position of a point of a rigid body or of a point being at a fixed position with respect to the rigid body; and (b) an orientation of a frame fixedly attached to the rigid body. The method comprises the following: An IMU is operated for providing information about a dynamic motion of the rigid body, the information being here referred to as "IMU-based dynamic motion information". At least one of the following is performed: (i) operating a sensor for at least intermittently providing one of: (i.1) information about pose parameters of the rigid body relative to a reference system that is not attached to the rigid body, and (i.2) information usable, in combination with measurements from the IMU, to estimate pose parameters of the rigid body relative to a reference system that is not attached to the rigid body; and (ii) acquiring an initial estimate of one of: (ii.1) pose parameters of the rigid body relative to a reference system that is not attached to the rigid body, and (ii.2) parameter(s) usable, in combination with measurements from the IMU, to estimate pose of the rigid body relative to a reference system that is not attached to the rigid body. Whether an accelerometer, here referred to as "external accelerometer", for providing further information about a dynamic motion of the rigid body is available and activated is determined, wherein the further information is here referred to as "additional dynamic motion information" and is provided as a data stream that need not be synchronized in time with the IMU-based dynamic motion information. The external accelerometer is operated if available and activated. An estimation process, here referred to as "estimator", is operated, wherein the estimator uses state variables and computes the values of its state variables based on (a) the IMU-based dynamic motion information; (b) at least one of: (b.1) data from the sensor, and (b.2) the initial estimate; and, (c) if the external accelerometer is available and activated, on the additional dynamic motion information.

The method of the above first embodiment makes it possible to provide a scalable technique for orientation estimation, or at least for generating information based on which orientation estimation can be derived, through the use of an external gyroscope as aiding sensor when the external gyroscope is available and activated. As to the method of the above second embodiment, it makes it possible to provide a scalable technique for pose parameters estimation, or at least for generating information based on which pose parameters estimation can be derived, through the use of an external accelerometer as aiding sensor when the external accelerometer is available and activated. In both the first and second embodiments, information from the external gyroscope or accelerometer, respectively, is used together with information from the IMU, and the integration may be performed in a scalable manner. That is, in some implementations, the external gyroscope or accelerometer may respectively be added (e.g., plugged) and activated, for example on demand and/or when desirable, for higher performance. The external gyroscope or accelerometer need not necessarily be permanently available and activated.

In some embodiments, systems are provided, each system comprising a device or a set of devices for acquiring data from the above-described elements (i.e., from the IMU, the sensor, etc.) and for operating an estimator as described above. In some embodiments, a vehicle or a survey pole comprises such a system.

In some embodiments, computer programs, and computer program products and storage media for storing such computer programs, are provided. Such computer programs comprise computer- and/or machine-readable instructions for carrying out, when executed on a processing unit such as one embedded in, or otherwise part of, a system as described above or in another apparatus, or when executed on a set of processing units such as a set of processing units embedded in, or otherwise part of, a set of devices of the system, the above-described operations performed by the system, comprising, inter alia, acquiring data from the above-described elements (i.e., from the IMU, the sensor, etc.) and operating an estimator as described above.

## [Brief description of the drawings]

Embodiments of the present invention shall now be described in conjunction with the appended drawings in which:

Fig. 1a is a schematic diagram of a method in one embodiment of the invention, in which an estimator is illustrated as receiving data from an IMU and a sensor and as capable of receiving additional heading change information from an external gyroscope;

Fig. 1b is a schematic diagram of a method in one embodiment of the invention, in which an estimator is illustrated as receiving data from an IMU and a sensor and as also receiving additional heading change information from an external gyroscope;

Fig. 2a is a schematic diagram of a method in one embodiment of the invention, in which an estimator is illustrated notably as acquiring an initial estimate and as capable of receiving additional heading change information from an external gyroscope;

Fig. 2b is a schematic diagram of a method in one embodiment of the invention, in which an estimator is illustrated notably as acquiring an initial estimate and as receiving additional heading change information from an external gyroscope;

Fig. 3a is a schematic diagram of a method in one embodiment of the invention, in which an estimator is illustrated as receiving data from an IMU and a sensor, as acquiring an initial estimate, and as capable of receiving additional heading change information from an external gyroscope;

Fig. 3b is a schematic diagram of a method in one embodiment of the invention, in which an estimator is illustrated as receiving data from an IMU and a sensor, as acquiring an initial estimate, and as also receiving additional heading change information from an external gyroscope;

Fig. 4 is a flowchart of the method schematically illustrated by the diagrams of Figs. 1a and 1b;

Fig. 5 is a flowchart of the method schematically illustrated by the diagrams of Figs. 2a and 2b;

Fig. 6 is a flowchart of the method schematically illustrated by the diagrams of Figs. 3a and 3b;

Fig. 7a is a schematic diagram of a method in one embodiment of the invention, in which an estimator is illustrated as receiving data from an IMU and a sensor and as capable of receiving additional dynamic motion information from an external accelerometer;

Fig. 7b is a schematic diagram of a method in one embodiment of the invention, in which an estimator is illustrated as receiving data from an IMU and a sensor and as also receiving additional dynamic motion information from an external accelerometer;

Fig. 8a is a schematic diagram of a method in one embodiment of the invention, in which an estimator is illustrated as notably acquiring an initial estimate and as capable of receiving additional dynamic motion information from an external accelerometer;

Fig. 8b is a schematic diagram of a method in one embodiment of the invention, in which an estimator is illustrated as notably acquiring an initial estimate and as receiving additional dynamic motion information from an external accelerometer;

Fig. 9a is a schematic diagram of a method in one embodiment of the invention, in which an estimator is illustrated as receiving data from an IMU and a sensor, as acquiring an initial estimate, and as capable of receiving additional dynamic motion information from an external accelerometer;

Fig. 9b is a schematic diagram of a method in one embodiment of the invention, in which an estimator is illustrated as receiving data from an IMU and a sensor, as acquiring an initial estimate, and as also receiving additional dynamic motion information from an external accelerometer;

Fig. 10 is a flowchart of the method schematically illustrated by the diagrams of Figs. 7a and 7b;

Fig. 11 is a flowchart of the method schematically illustrated by the diagrams of Figs. 8a and 8b;

Fig. 12 is a flowchart of the method schematically illustrated by the diagrams of Figs. 9a and 9b;

Fig. 13 is a schematic diagram of a system using an external accelerometer for estimating a telescopic survey pole's height;

Fig. 14 is a schematic diagram of a system using an external accelerometer for estimating a telescopic survey pole's misalignment;

Fig. 15 is a schematic diagram of a system using an external accelerometer for calibrating a survey pole; and

Figs. 16 to 21 schematically illustrate systems in six embodiments of the invention.

**[Detailed description]**

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that they are not mutually exclusive.

Throughout the following description, the abbreviation "GNSS" is sometimes used. The invention is, however, not limited to global navigation satellite systems (GNSS) but also applies to regional navigation satellite systems (RNSS). Thus, it is to be understood that each occurrence of "GNSS" in the following can be replaced with "RNSS" to form additional embodiments. In addition, the term "navigation satellite system" (NSS) is here intended to cover many types of embodiments, and those may also include embodiments involving MEO-PNT and/or LEO-PNT navigation satellite systems.

In the art, the term "observables" is often used to refer to structures of an NSS signal from which observations or measurements can be made (PRN-code, carrier phase). See e.g. ref. [1]: "The word *observable* is used throughout GPS literature to indicate the signals whose measurement yields the range or distance between the satellite and the receiver" (a list of references is provided at the end of the present description, after a list of abbreviations and acronyms). However, in common usage, and in the present document, the term "observable" (also referred to as "NSS observable") is also interchangeably used to refer to the observation itself, such that, for example, "carrier phase observable" has the same meaning as "carrier phase observation". Further, when the present document describes that an NSS signal is observed, this means that at least one observation (measurement) of at least one observable of the NSS signal is made.

When the term "real-time" is used in the present document, it means that there is an action (e.g., data is processed, results are computed) as soon as the required information for that action is available. Thus, certain latency exists, which depends on various aspects depending on the involved component(s) of the system.

When the verb "broadcast" (and "broadcasting", etc.) is used, this also covers embodiments where the transmission is a form of multicasting.

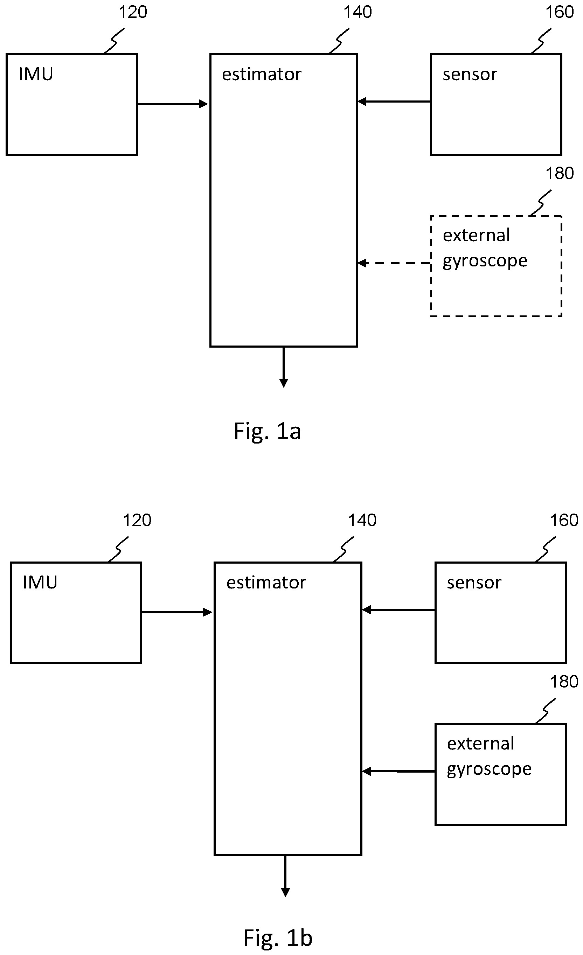

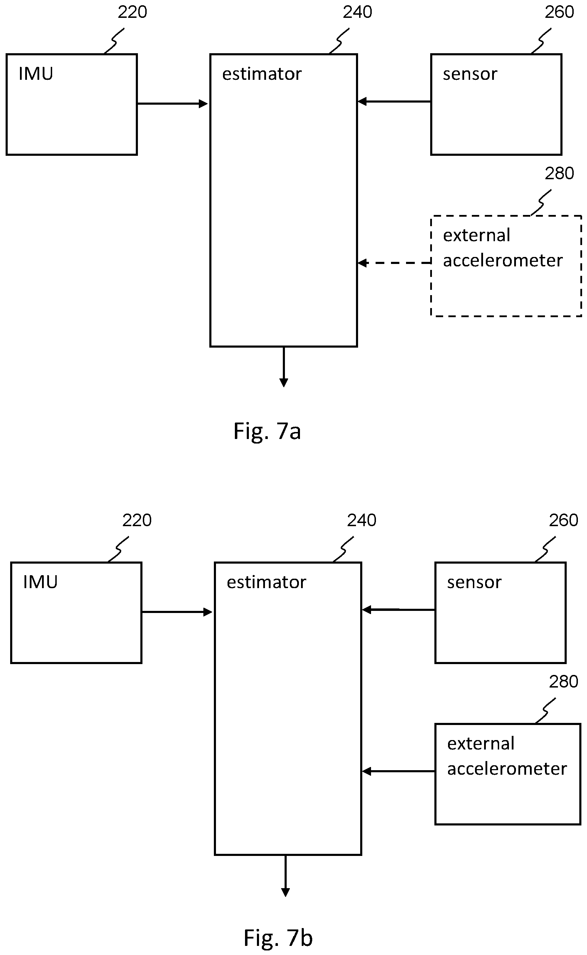

Figs. 1a to 6 relate to methods for orientation estimation or at least for generating information based on which orientation estimation can be derived. The methods are notably based on operating a gyroscope, here referred to as "external gyroscope", if available and activated. Explanations about embodiments using such an external gyroscope are also provided in section A. titled "Further embodiments using an external gyroscope" below. Figs. 7a to 12 relate to methods for pose parameters estimation or at least for generating information based on which pose parameters estimation can be derived. The methods are notably based on operating an accelerometer, here referred to as "external accelerometer", if available and activated. Explanations about embodiments using such an external accelerometer are also provided in section B. titled "Further embodiments using an external accelerometer" below.

The systems described with reference to Figs. 1a to 12 may be regarded as aided inertial navigation systems (AINS). Both the methods according to Figs. 1a to 6 and those according to Figs. 7a to 12 have in common that they use an auxiliary inertial sensor in addition to the IMU. Furthermore, data from an "external gyroscope" or "external accelerometer" is processed as an aiding measurement for the AINS estimator, providing the AINS estimator with additional information. One of the benefits of the use of an external gyroscope may be the heading performance improvement, whereas the benefits of the use of an external accelerometer may be diverse and will be explained further below.

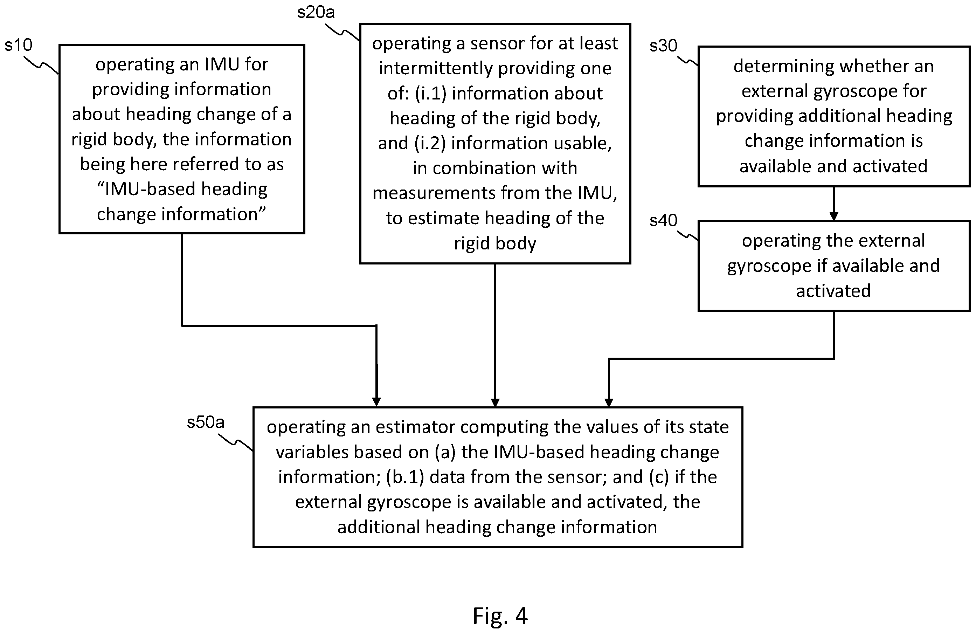

Figs. 1a and 1b are two schematic diagrams of a method in one embodiment of the invention, and Fig. 4 is a corresponding flowchart of that method. The purpose of the method is to estimate the orientation of a rigid body (the rigid body per se is not illustrated in Figs. 1a and 1b), or at least to generate information based on which estimation of the orientation of the rigid body can be derived. In other words, the purpose of the method is orientation estimation or at least generating information based on which orientation estimation can be derived. The wordings "to estimate the orientation" and "orientation estimation" encompass both heading estimation and also relative orientation estimation, i.e. without necessarily providing absolute heading information. Orientation may be relative to e.g. Earth-centered, Earth-fixed coordinate system or another navigation reference frame or orientation may be relative to the IMU frame or some other body fixed reference frame.

The method is carried out by a system comprising the elements described below and depicted in Figs. 1a and 1b (i.e., IMU 120, estimator 140, sensor 160, etc.), and the system may also comprise some form of controller, control unit, processor, or processing unit (not illustrated in Figs. 1a and 1b) to perform and/or coordinate the operations described below, such as for example determining operation s30, and/or to cause these operations to be performed. The controller, control unit, processor, or processing unit may for example operate as a result of the execution of machine-readable instructions stored in a machine-readable memory. The controller, control unit, processor, or processing unit may for example be implemented in software, hardware, a combination of software and hardware, or pre-programmed ASICs.

The method comprises the following operations, which will be described with reference to Figs. 1a, 1b, and 4.

In operation s10 (see Fig. 4), an IMU 120 (see Figs. 1a and 1b) is operated for providing information about heading change of the rigid body. In this respect, in order to provide information about heading change of the rigid body, IMU 120 may be rigidly attached to the rigid body or, alternatively, IMU 120 may be allowed to move with respect to the rigid body by being subject to a pure translational relative motion where the relative orientation of IMU frame and rigid body remains constant. The information provided by IMU 120 about heading change of the rigid body is here referred to as "IMU-based heading change information". IMU 120 may be part of an INS (not illustrated in Figs. 1a and 1b). An INS is a three-dimensional dead-reckoning navigation system comprising at least a navigation processor and an IMU (see, e.g., ref. [2], pp. 7-8, section 1.2). An IMU comprises at least three mutually orthogonal accelerometers and three gyroscopes. In one embodiment, the INS's navigation processor is incorporated into estimator 140 (which will be described further below). In one embodiment, IMU 120 provides IMU-based heading change information to estimator 140 (which will be described further below) at a high rate, i.e. at a rate in the range from 50 Hz to 400 Hz, without interruption, for heading propagation. In another embodiment, IMU 120 provides IMU-based heading change information to estimator 140 at a lower rate, i.e. in the range from 8 Hz to below 50 Hz, such as for example at 20 or 10 Hz, without interruption, for heading propagation.

By "provides", "providing", "provision", or the like (as in "IMU 120 provides (...) to (...)" for example), in relation to information, data, etc., it is here meant any type of wired or wireless data transmission such as, and without being limited to, wireless transmissions based on Bluetooth, Wi-Fi, or Li-Fi. In one embodiment, the data is transmitted in real-time, i.e. as soon as available (in line with the above-mentioned definition of the term "real-time"). This applies to all other parts of the present disclosure, too.

In operation s20a (see Fig. 4), a sensor 160 (see Figs. 1a and 1b) is operated for at least intermittently providing (i.1) information about, i.e. relating to, heading of the rigid body, or (i.2) information usable, in combination with measurements from IMU 120, to estimate heading of the rigid body.

Above-referred embodiment (i.2), in which sensor 160 is operated for at least intermittently providing information usable, in combination with measurements from IMU 120, to estimate heading of the rigid body, implies that sensor 160 does not necessarily provide information about absolute heading directly but may provide information usable to estimate absolute heading of the rigid body in combination with the IMU measurements (i.e., through sensor fusion). An example is GNSS/INS (fusion of the data from GNSS and INS) with a single antenna. In embodiment (i.2), the measurements from IMU 120 may comprise all measurements from IMU 120, i.e. also including accelerometer measurements to provide information usable to estimate absolute heading of the rigid body.

By "at least intermittently", it is meant here either with or without interruptions in the provision of the information, i.e. the information referred to in above embodiments (i.1) and (i.2). While IMU 120 provides information about heading change of the rigid body over time, the information that sensor 160 provides enables estimator 140 (which will be further described below) to also obtain information about the heading of the rigid body, wherein heading, also sometimes called "absolute heading", is heading in a reference frame attached to the Earth, e.g. in Earth-centered, Earth-fixed (ECEF) coordinate system.

In one embodiment, sensor 160 is, or comprises, at least one of: a dual-antenna navigation satellite system (NSS) receiver (as will be described below), a NSS receiver with a single antenna (as will also be described below), a lidar sensor (to make 3D measurements of the environment around the sensor and compare those with a known reference 3D model), and a robotic total station (RTS) that tracks and measures the position of a target fixed to the rigid body.

In operation s30 (see Fig. 4), it is determined whether a gyroscope 180, here referred to as "external gyroscope" 180, for providing further information about heading change of the rigid body is available and activated. Fig. 1a schematically illustrates the situation in which external gyroscope 180 is either (i) not available or (ii) available but not activated. The dashed lines associated with the box labelled "external gyroscope" (reference numeral 180) in Fig. 1a are used to schematically represent this situation, i.e. estimator 140 (which will be further described below) is capable of receiving data from an external gyroscope but currently does not receive data therefrom. In contrast, Fig. 1b schematically illustrates the situation in which external gyroscope 180 is available and activated so that estimator 140 (which will be further described below) may receive data therefrom. In one embodiment, activating external gyroscope 180 may be carried out by means of a user entering an access code in a user interface of a device hosting estimator 140 (which will be further described below).

The further information provided by external gyroscope 180 is here referred to as "additional heading change information", as the information from external gyroscope 180 is provided, if external gyroscope 180 is available and activated, in addition to the IMU-based heading change information from IMU 120. The additional heading change information is provided, if external gyroscope 180 is available and activated, as a data stream that need not be synchronized in time with the IMU-based heading change information. This means that the method may comprise refraining from taking any measure (e.g., calibration measures) to ensure that the additional heading change information would be provided as a data stream synchronized in time with the IMU-based heading change information. In other words, the data stream from external gyroscope 180 need not be synchronized with the rate and time grid of the IMU data. In yet other words, the method works even if external gyroscope 180 produces measurements at points in time that are different from the IMU measurement times. In one embodiment, external gyroscope 180 produces measurements at a lower rate than IMU 120. For example, the method may make use of data from IMU 120 at a rate of 200 Hz and integrated 20Hz data from external gyroscope 180. See for example equation (1) in section A.1. below.

Further, in one embodiment, none of the axes of external gyroscope 180 need to be parallel to any of the axes of IMU 120. That is, the method works even if none of the axes of external gyroscope 180 are parallel to any of the axes of IMU 120. This means that, in this embodiment, the method may further comprise refraining from taking any measure (e.g., calibration measures) to ensure parallelism of axes of external gyroscope 180 with axes of IMU 120. In one embodiment, none of the axes of external gyroscope 180 is parallel to any of the axes of IMU 120.

Estimator 140 (which will be further described below) is capable of outputting results with or without external gyroscope 180. That is, when external gyroscope 180 is not provided (i.e., either (i) not available or (ii) available but not activated), estimator 140 may operate without it. When external gyroscope 180 is provided, i.e. is available and activated, estimator 140 can take the output of external gyroscope 180 into account.

In operation s40 (see Fig. 4), if external gyroscope 180 is available and activated, external gyroscope 180 is operated. In this case, external gyroscope 180 provides additional aiding measurements to estimator 140 (which will be further described below).

In operation s50a (see Fig. 4), an estimation process 140, here referred to as "estimator" 140 (see Figs. 1a and 1b), is operated. Estimator 140 uses state variables and computes the values of its state variables based on: (a) the IMU-based heading change information from IMU 120, (b) data from sensor 160, and (c), if external gyroscope 180 is available and activated, the additional heading change information from external gyroscope 180.

If the data from sensor 160 includes information usable, in combination with measurements from IMU 120, to estimate heading of the rigid body (see above-referred item (i.2) described in the context of operation s20a), estimator 140, in one embodiment, not only computes the values of its state variables based on the IMU-based heading change information from IMU 120 but also based on other measurements from IMU 120 such as accelerometer measurements therefrom.

Estimator 140 may, in some embodiments, use additional data to compute the values of its state variables, such as data from a broadcasted correction stream (see e.g. refs. [3] and [4] when it comes to NSS-related correction information).

Estimator 140 is, or comprises, an algorithm, procedure, or process, or a piece of software, firmware, and/or hardware configured for implementing such an algorithm, procedure, or process, in which a set of state variables (or "state vector") is maintained over time, i.e. the values of the state variables are estimated based on measurements made over time. Specifically, the measurements fed into estimator 140 may comprise data representing angular changes around an axis of external gyroscope 180. Estimator 140 comprises, in one embodiment, a Kalman filter, an unscented Kalman filter, a particle filter, and/or a least squares estimator. The invention is, however, not limited to the use of Kalman filters, unscented Kalman filters, particle filters, and/or least squares estimators. Other estimation processes, filters, or filter techniques may be used. Furthermore, estimator 140 may comprise more than a Kalman filter, an unscented Kalman filter, a particle filter, and/or a least squares estimator, i.e. estimator 140 may comprise additional functionality. Hence, estimator 140 may also be referred to as AINS estimator, including state estimation and computing for example equation (4) as described section A.1. below.

Some of the estimator's 140 state variables may represent, for example, the integral over time of an angular rate about an axis of external gyroscope 180. State variables may also represent any one of, or any combination of: the error of the INS heading, the biases and scale factor errors of IMU 120 and external gyroscope 180, and the misalignment of the external gyroscope frame and IMU frame.

Regarding how estimator 140 may be operated, see, as a possible example of implementation, equation (2) in section A.1. below and the intermediate rate delta-angle measurements from external gyro 180 to match the estimator epochs.

In one embodiment, estimator 140 computes values of its state variables at the IMU data rate. In other embodiments, estimator 140 computes values of its state variables at another rate than the IMU data rate.

Estimator's 140 time steps, i.e. the rate at which estimator 140 computes values of its state variables, may be shorter than, equal to, or longer than the data interval of the integrated external gyroscope data. For example, a relatively low estimator rate such as 1 or 5Hz may be used to save processing load. The integration and time synchronization of external gyroscope data in equations (1) and (2) (see section A.1. below) may, in one embodiment, be used as underlying techniques to implement this case. In one embodiment, the estimator rate is lower than the e.g. 20Hz rate of the integrated external gyroscope data. In one embodiment, the same or a higher rate (e.g. 5Hz estimator rate and 5Hz or only 2Hz external gyroscope rate) may be used.

The output of the method may for example comprise orientation data, such as an estimation of the orientation of the rigid body relative to a reference frame, and the orientation data may for example be used in a highly automated driving or autonomous driving application relying on orientation measurements to produce, or to participate in producing, an estimate of the position, velocity, or acceleration of a vehicle.

In the embodiment described with reference to Figs. 1a, 1b, and 4, information from external gyroscope 180 is used together with information from IMU 120 and sensor 160 in estimator 140, and the integration, i.e. the incorporation, is performed in a scalable manner. That is, external gyroscope 180 may be added, e.g. plugged or otherwise connected, and activated, for example on demand and/or when desirable, for higher performance. External gyroscope 180 need not necessarily be permanently available and activated. In other words, an external gyroscope 180 may be connected (e.g. by being plugged in using a USB connector, an Ethernet connector, or the like), by wired means or wirelessly, to the system for scalability purposes to increase the performance, i.e. for providing a higher-grade system. Furthermore, if plugged, external gyroscope 180 may be disabled and even disconnected, if desired for any reason, e.g. for reducing power consumption at a particular point in time when the added value of external gyroscope 180 is not needed.

The solutions involving the use of an external gyroscope 180 in accordance with some embodiments of the invention allow overcoming obstacles that might arise in other methods. These obstacles might be that the external gyro would produce measurements about a sensor axis that may not be parallel to any of the IMU axes (and this relative orientation may not be known accurately) and that the measurements may not be time aligned with the IMU measurements. In addition, the external gyro measurements may be degraded by noise. In some embodiments, the estimator measurement in, for example, equation (5) (see section A.1. below) addresses this by time integration, time interpolation of the integrated data, and the computation of delta-angle vectors in sensor frame coordinates in equation (4). This allows for integrating all information contained in the external gyro measurements with a low processing demand, and this allows to estimate the relative orientation.

Yet furthermore, some embodiments may also have the following advantage: External gyroscope 180 may be saturating at a lower range than the gyroscopes of IMU 120. Some embodiments may handle this well by ignoring saturated external gyroscope data (possibilities are a sensor status indicating saturation or the check of IMU data to determine if the motion exceeds the external gyroscope range). This is valuable because low dynamic range of external gyroscope 180 may come with higher accuracy at the same price point.

Additionally, some embodiments may also have the advantage that it is possible to test the external measurements in the state estimator (e.g. with an innovation test) and reject outliers that may occur. External gyroscope 180 may be less robust (but may have a higher accuracy) and hence may produce outlier measurements during times of operation with shocks and high vibrations.

In one embodiment, external gyroscope's 180 measurement errors and errors in the relative orientation to IMU 120 are estimated even if the relative orientation between external gyroscope 180 and IMU 120 is only coarsely known (i.e., for example, with an accuracy of 1 to 3 degrees if the knowledge of the relative orientation is based on designs of electronic boards and on the housing of the electronic boards). This means that, in some embodiments, calibration in terms of the relative orientation between external gyroscope 180 and IMU 120 is not needed, which makes the use of external gyroscope 180 in the method particularly flexible. In one embodiment, external gyroscope's 180 measurement errors and errors in the relative orientation to IMU 120 are estimated using states in estimator 140 that represent external gyroscope measurement errors such as bias and scale factor error, or representing the rotation vector of the rotation between an assumed sensor frame and the true sensor frame.

In one embodiment, estimator 140 computes the values of its state variables by computing time updates of the state variables based on: (a) the IMU-based heading change information from IMU 120, (b) measurement updates from sensor 160, and (c), if external gyroscope 180 is available and activated, the additional heading change information from external gyroscope 180. In other words, estimator 140 computes time updates of the state variables based on the IMU-based heading change information, and measurement updates based on sensor 160 and, if available and activated, external gyroscope's 180 data.

In one embodiment, estimator 140 integrates over time an angular rate, i.e. a rotation rate, about an axis of external gyroscope 180. External gyroscope's 180 axis about which estimator 140 integrates over time an angular rate is an axis that moves or may move. In other words, estimator 140 performs a time integration of measurements. This integration over time of an angular rate is advantageous and desirable especially for implementations that provide accuracy at low computational demand. Specifically, external gyroscope's 180 measurements and IMU's 120 gyroscope measurements may be integrated between consecutive epochs of estimator 140 (see for example "delta-angle" in section A.1. below in relation to equations (2) and (4)). Estimator 140 may process the difference of the two integrals as estimator measurement (see for example equation (5) in section A.1. below).

In one embodiment, estimator 140 acquires data from a plurality of sensors 160. In one embodiment, estimator 140 acquires data from a plurality of external gyroscopes 180. In one embodiment, estimator 140 acquires data from a plurality of sensors 160 and from a plurality of external gyroscopes 180. The verb "acquire" encompasses here any of gaining, getting, obtaining, retrieving, fetching, receiving, or any combination thereof, this applying to the entire disclosure of the present document.

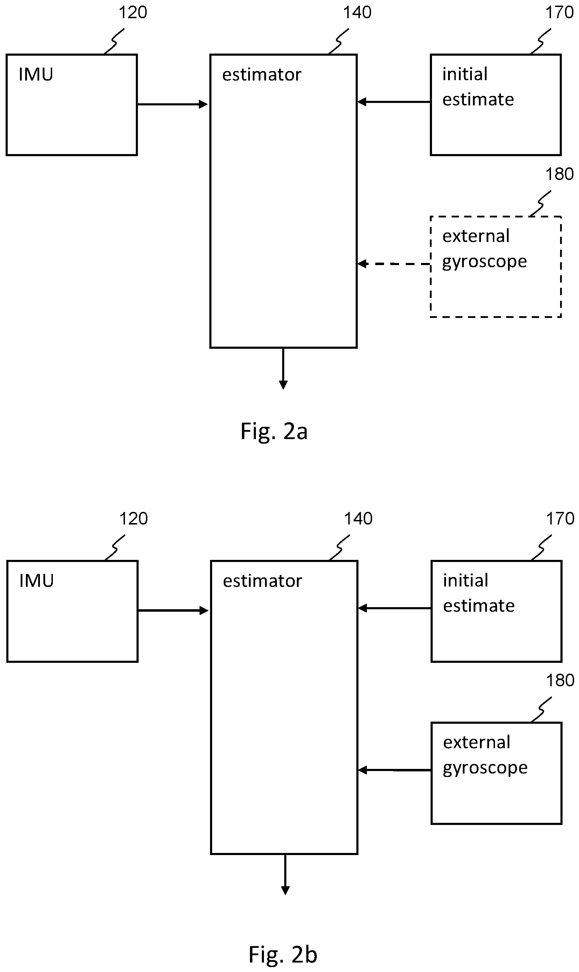

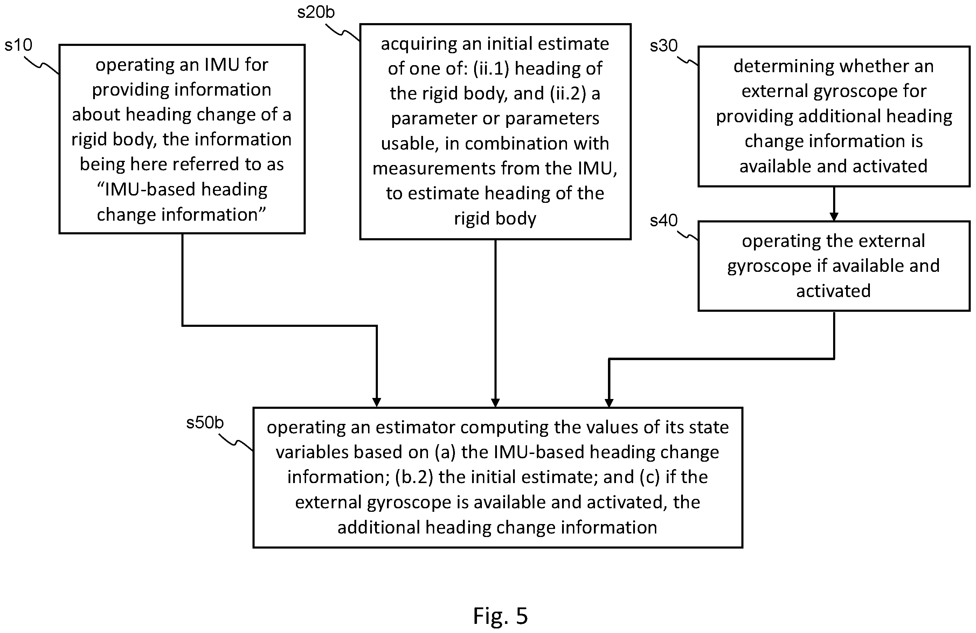

Figs. 2a and 2b are two schematic diagrams of a method in another embodiment of the invention, and Fig. 5 is a corresponding flowchart of that method. Specifically, in the method schematically illustrated by Figs. 2a, 2b, and 5, instead of operating s20a sensor 160 and operating s50a estimator 140 in such a way that estimator 140 computes the values of its state variables based on, among other data, data from sensor 160, an initial estimate 170 (see Figs. 2a and 2b) is acquired s20b (see Fig. 5) and estimator 140 is operated s50b in such a way that estimator 140 computes the values of its state variables based on, among other data, initial estimate 170. Specifically, initial estimate 170 is an estimate of one of: (ii.1) heading of the rigid body, and (ii.2) a parameter or parameters usable, in combination with measurements from IMU 120, to estimate heading of the rigid body. Initial estimate 170 may for example be a hypothesis (e.g., an educated estimate) or a value read from some memory (e.g., stored after a previous operation), or produced with a gyrocompassing method for example based on measuring the Earth rate with an accurate IMU (see for example ref. [7]). The parameter(s) usable, in combination with measurements from IMU 120, to estimate heading of the rigid body may for example be the relative orientation of a body-fixed frame with respect to the ECEF frame in combination with the position of the rigid body. Apart from these differences, the method schematically illustrated by Figs. 2a, 2b, and 5 may be as described with reference to Figs. 1a, 1b, and 4.

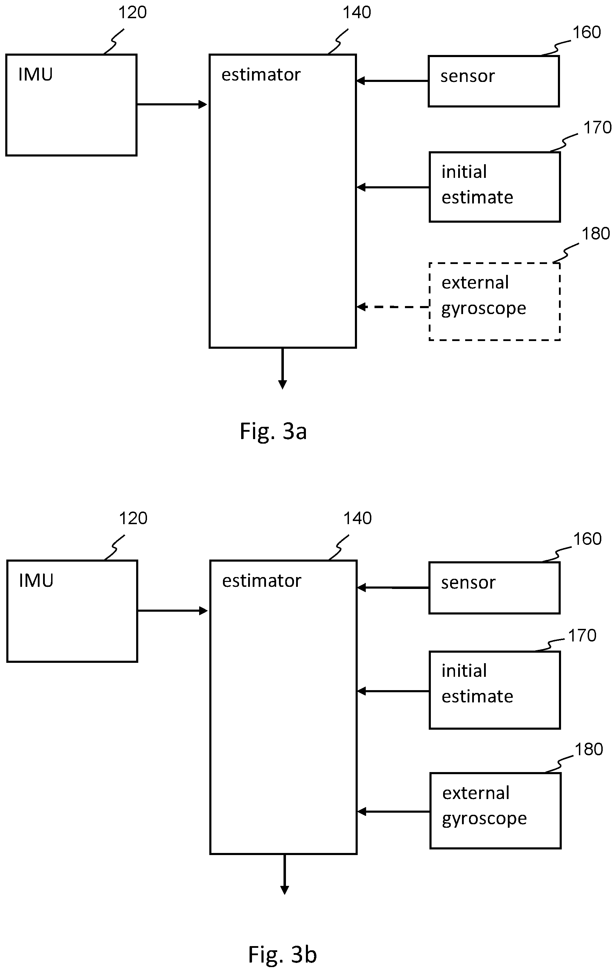

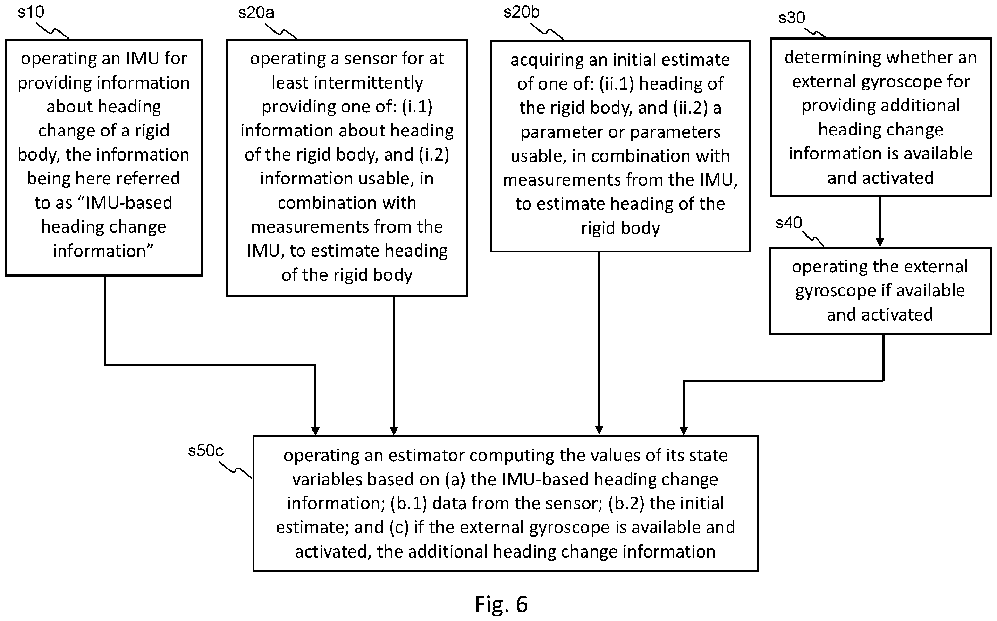

Figs. 3a and 3b are two schematic diagrams of a method in another embodiment of the invention, and Fig. 6 is a corresponding flowchart of that method. Specifically, in the method schematically illustrated by Figs. 3a, 3b, and 6, in addition to operating s20a sensor 160 and operating s50a estimator 140 in such a way that estimator 140 computes the values of its state variables based on, among other data, data from sensor 160, an initial estimate 170 (see Figs. 3a and 3b) is also acquired s20b (see Fig. 6) and estimator 140 is operated s50c in such a way that estimator 140 computes the values of its state variables based on, among other data, data from sensor 160 and on initial estimate 170. The method schematically illustrated by Figs. 3a, 3b, and 6 therefore combines the features of both the methods schematically illustrated by Figs. 1a, 1b, and 4 and Figs. 2a, 2b, and 5. Reference is therefore made to the above description of these embodiments regarding how the method schematically illustrated by Figs. 3a, 3b, and 6 may be implemented.

In one embodiment, the method comprises operating s20a sensor 160 (as illustrated for example by Figs. 1a, 1b, 3a, 3b, 4, and 6), and sensor 160 comprises: (i) a dual-antenna navigation satellite system (NSS) receiver, and/or (ii) a NSS receiver with a single antenna (this is for example known as GNSS/INS and described in ref. [2]). By dual-antenna NSS receiver, it is here meant an NSS receiver with at least two antennas. That is, the dual-antenna NSS receiver may comprise two antennas or more than two antennas, such as three or four antennas. The dual-antenna or single-antenna NSS receiver may be configured for observing NSS signals from a plurality of NSS satellites over multiple epochs. If the NSS receiver comprises one antenna configured to receive signals at one frequency, there may be a single electrical antenna phase centre (APC). If NSS receiver comprises one antenna configured to receive signals at a plurality of frequencies (i.e., different frequencies broadcasted by NSS satellites, whether from one NSS or from a plurality of NSS), there may be one APC per frequency, i.e. in total a plurality of APCs. Likewise, there are a plurality of APCs if the NSS receiver comprises a plurality of antennas. Handling a plurality of APCs -and corresponding NSS signals and measurements- associated with different frequencies in parallel may be done for example using antenna phase correction tables.

A NSS receiver may be used for positioning purposes based on detection of a code, also called "ranging code", modulated on an electromagnetic signal broadcast by a satellite, and/or based on carrier signals. That is, carrier signals transmitted by the NSS satellites can also be tracked to provide an alternative, or complementary way of determining the range, or change in range between the receiver and satellite. Carrier phase measurements from multiple NSS satellites may facilitate estimation of the position of the NSS receiver. GNSS observation equations for code observations and for carrier phase observations are for example provided in ref. [5], section 5. The same or similar principles apply to RNSS. The main GNSS observables are therefore the code (also called pseudorange code) and the carrier phase. These observables enable a user to obtain the geometric distance from the NSS receiver to the satellite. With known satellite position and satellite clock error, the receiver position and receiver clock error can be estimated.

In one embodiment, IMU 120 and external gyroscope 180 are attached to different rigid bodies, and the method further comprises monitoring a relative orientation of IMU 120 and external gyroscope 180. This means that IMU 120 and external gyroscope 180 can be moved differently provided that their relative orientation is monitored. In such a case, estimator 140 may have a state variable, or a set of state variables, to monitor the relative orientation of IMU 120 and external gyroscope 180 and, thus, to take the relative orientation into account. This means that, even if external gyroscope 180 is not attached to the same rigid body as IMU 120, the knowledge of the relative orientation of IMU 120 and external gyroscope 180 means that external gyroscope 180 is also providing information about heading change of the rigid body. Estimator 140 may output information about the relative orientation of IMU 120 and external gyroscope 180 without necessarily providing absolute heading information as an output. In turn, the output of the method may for example be the orientation of the rigid body to which external gyroscope 180 is attached, the orientation being relative to the IMU frame or some other body fixed reference frame.

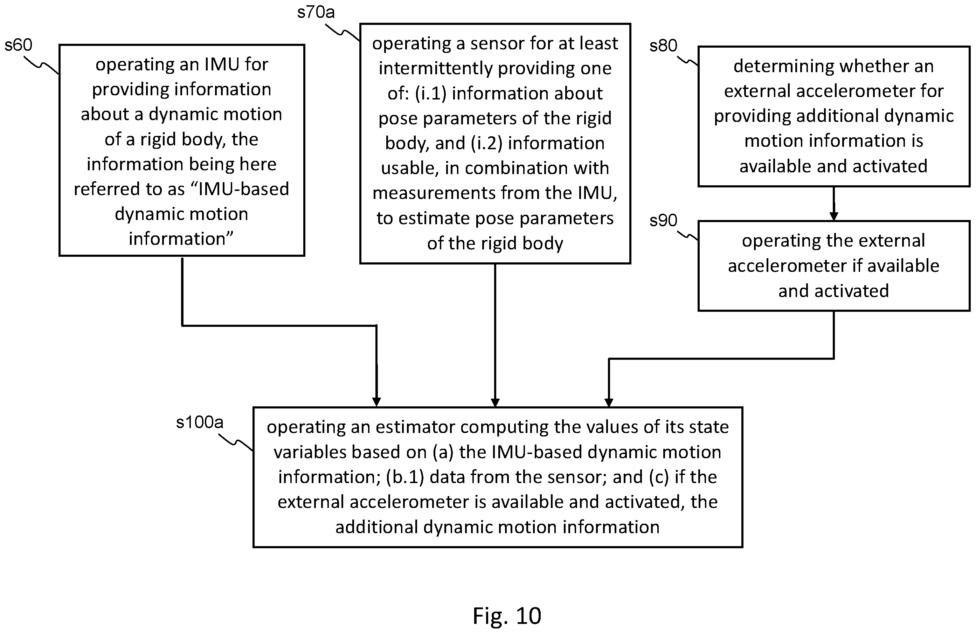

Figs. 7a and 7b are two schematic diagrams of a method in one embodiment of the invention, and Fig. 10 is a corresponding flowchart of that method. The purpose of the method is to estimate pose parameters or at least to generate information based on which pose parameters estimation can be derived. The term "pose" here refers to both position and orientation, and the phrase "pose parameters" refers to either position or orientation, or to both. More specifically, the pose parameters here comprise at least one of: (a) a position of a point, i.e. a point of reference, of a rigid body (the rigid body is not illustrated in Figs. 7a and 7b) or of a point, i.e. a point of reference, being at a fixed position with respect to the rigid body; and (b) an orientation of a frame, i.e. an imaginary frame, fixedly attached to the rigid body. The pose parameters may be relative to e.g. Earth-centered, Earth-fixed (ECEF) coordinate system or another navigation reference frame (i.e., geographic position) or the pose parameters may be relative to the IMU center and frame or some other body fixed reference point and frame (i.e., delta-position). Furthermore, the term "position" may here comprise three parameters (for a 3D position) or fewer parameters, e.g. one parameter for a distance.

The method is carried out by a system comprising the elements described below and depicted in Figs. 7a and 7b (i.e., IMU 220, estimator 240, sensor 260, etc.), and the system may also comprise some form of controller, control unit, processor, or processing unit (not illustrated in Figs. 7a and 7b) to perform the operations described below, such as for example operation s80, and/or to cause these operations to be performed. The controller, control unit, processor, or processing unit may for example operate as a result of the execution of machine-readable instructions stored in a machine-readable memory. The controller, control unit, processor, or processing unit may for example be implemented in software, hardware, combination of software and hardware, or pre-programmed ASICs.

The method comprises the following operations, which will be described with reference to Figs. 7a, 7b, and 10.

In operation s60 (see Fig. 10), an IMU 220 (see Figs. 7a and 7b) is operated for providing information about dynamic motion of the rigid body. The information provided by IMU 220 about dynamic motion of the rigid body is here referred to as "IMU-based dynamic motion information". By "dynamic motion", it is here meant acceleration and/or rotation (angular velocity), but not constant speed. In this respect, what has been described above in relation to IMU 120 applies also to IMU 220, except that IMU 220 provides information about dynamic motion of the rigid body as described above. That is, IMU 220 is provided for pose parameters propagation.

In operation s70a (see Fig. 10), a sensor 260 (see Figs. 7a and 7b) is operated for at least intermittently providing (i.1) information about pose parameters of the rigid body relative to a reference system that is not attached to the rigid body, or (i.2) information usable, in combination with measurements from IMU 220, to estimate pose parameters of the rigid body relative to a reference system that is not attached to the rigid body. The reference system comprises both reference frame orientation and origin. In relation to operation s70a, what has been described above in relation to sensor 160 applies also to sensor 260, except for the information provided by the sensors as described above.

In operation s80 (see Fig. 10), it is determined whether an accelerometer 280, here referred to as "external accelerometer" 280, for providing further information about dynamic motion of the rigid body is available and activated. Fig. 7a schematically illustrates the situation in which external accelerometer 280 is either (i) not available or (ii) available but not activated. The dashed lines associated with the box labelled "external accelerometer" (reference numeral 280) in Fig. 7a are used to schematically represent this situation, i.e. estimator 240 (which will be further described below) is capable of receiving data from an external accelerometer but currently does not receive data therefrom. In contrast, Fig. 7b schematically illustrates the situation in which external accelerometer 280 is available and activated so that estimator 240 (which will be further described below) may receive data therefrom. In one embodiment, activating external accelerometer 280 may be carried out by means of a user entering an access code in a user interface of a device hosting estimator 240 (which will be further described below).

The further information provided by external accelerometer 280 is here referred to as "additional dynamic motion information", as the information from external accelerometer 280 is provided, if external accelerometer 280 is available and activated, in addition to the IMU-based dynamic motion information from IMU 220. The additional dynamic motion information is provided, if external accelerometer 280 is available and activated, as a data stream that need not be synchronized in time with the IMU-based dynamic motion information. This means that the method may comprise refraining from taking any measure (e.g., calibration measures) to ensure that the additional dynamic motion information would be provided as a data stream synchronized in time with the IMU-based dynamic motion information. In other words, the data stream from external accelerometer 280 need not be synchronized with the rate and time grid of the IMU data. In yet other words, the method works even if external accelerometer 280 produces measurements at points in time that are different from the IMU measurement times. In one embodiment, external accelerometer 280 produces measurements at a lower rate than IMU 220. For example, the method may make use of data from IMU 220 at a rate of 200 Hz and integrated 20Hz data from external accelerometer 280.

Further, in one embodiment, none of the axes of external accelerometer 280 need to be parallel to any of the axes of IMU 220. That is, the method works even if none of the axes of external accelerometer 280 are parallel to any of the axes of IMU 220. This means that, in this embodiment, the method may further comprise refraining from taking any measure (e.g., calibration measures) to ensure parallelism of axes of external accelerometer 280 with axes of IMU 220. In one embodiment, none of the axes of external accelerometer 280 is parallel to any of the axes of IMU 220.

Estimator 240 (which will be further described below) is capable of outputting results with or without external accelerometer 280. That is, when external accelerometer 280 is not provided (i.e., either (i) not available or (ii) available but not activated), estimator 240 may operate without it. When external accelerometer 280 is provided, i.e. available and activated, estimator 240 can take the output of external accelerometer 280 into account.

In operation s90 (see Fig. 10), if external accelerometer 280 is available and activated, external accelerometer 280 is operated. In this case, external accelerometer 280 provides additional aiding measurements to estimator 240 (which will be further described below).

In operation s100a (see Fig. 10), an estimation process 240, here referred to as "estimator" 240 (see Figs. 7a and 7b), is operated. Estimator 240 uses state variables, and it computes the values of its state variables based on: (a) the IMU-based dynamic motion information from IMU 220; (b) data from sensor 260; and (c), if the external accelerometer 280 is available and activated, the additional dynamic motion information from external accelerometer 280.

Estimator 240 may, in some embodiments, use additional data to compute the values of its state variables, such as data from a broadcasted correction stream (see e.g. refs. [3] and [4] when it comes to NSS-related correction information).

Estimator 240 is, or comprises, an algorithm, procedure, or process, or a piece of software, firmware, and/or hardware configured for implementing such an algorithm, procedure, or process, in which a set of state variables (or "state vector") is maintained over time, i.e. the values of the state variables are estimated based on measurements made over time. Specifically, the measurements inputted into estimator 240 may comprise data representing accelerometer measurements along an axis of external accelerometer 280. Estimator 240 comprises, in one embodiment, a Kalman filter, an unscented Kalman filter, a particle filter, and/or a least squares estimator. The invention is, however, not limited to the use of Kalman filters, unscented Kalman filters, particle filters, and/or least squares estimators. Other estimation processes, filters, or filter techniques may be used.

Some of the estimator's 240 state variables may represent, for example, pose parameters of the rigid body. State variables may also represent any one of, or any combination of: IMU bias and scale factor errors.

In one embodiment, estimator 240 computes values of its state variables at the IMU data rate. In other embodiments, estimator 240 computes values of its state variables at another rate than the IMU data rate.

Estimator's 240 time steps, i.e. the rate at which estimator 240 computes values of its state variables, may be shorter than, equal to, or longer than the data interval of the integrated external accelerometer data. For example, a relatively low estimator rate such as 1 or 5 Hz may be used to save processing load. In one embodiment, the estimator rate is lower than the e.g. 20Hz rate of the integrated external accelerometer data. In one embodiment, the same or a higher rate (e.g. 5Hz estimator rate and 5Hz or only 2Hz external accelerometer rate) may be used.

The output of the method may for example comprise pose parameters data that may be used in a highly automated driving or autonomous driving application relying on orientation measurements to produce an estimate of the position, velocity, or acceleration of a vehicle.

In the embodiment described with reference to Figs. 7a, 7b, and 10, information from external accelerometer 280 is used together with information from IMU 220 and sensor 260 in estimator 240, and the integration, i.e. the incorporation, is performed in a scalable manner. That is, external accelerometer 280 may be added, e.g. plugged or otherwise connected, and activated, for example on demand and/or when desirable, for higher performance. External accelerometer 280 need not necessarily be permanently available and activated. In other words, an external accelerometer 280 may be connected (e.g. by being plugged in using a USB connector, an Ethernet connector, or the like), by wired means or wirelessly, to the system for scalability purposes to increase the performance, i.e. for providing a higher-grade system. Furthermore, if plugged, external accelerometer 280 may be disabled and even disconnected, if desired for any reason, e.g. for reducing power consumption at a particular point in time when not needed.

The solutions involving the use of an external accelerometer 280 in accordance with some embodiments of the invention allow overcoming obstacles that might arise in other methods. These obstacles might be that the external accelerometer would produce measurements along a sensor axis that may not be parallel to any of the IMU axes (and this relative orientation may not be known accurately) and that the measurements may not be time aligned with the IMU measurements. In addition, the external accelerometer measurements may be degraded by noise.

Yet furthermore, some embodiments may also have the following advantage: External accelerometer 280 may be saturating at a lower range than the accelerometers of IMU 220. Some embodiments may handle this well by ignoring saturated external accelerometer data (possibilities are a sensor status indicating saturation or the check of IMU data to determine if the motion exceeds the external accelerometer range). This is valuable because low dynamic range of external accelerometer 280 may come with higher accuracy at the same price point.

Additionally, some embodiments may also have the advantage that it is possible to test the external measurements in the state estimator (e.g. with an innovation test) and reject outliers that may occur. External accelerometer 280 may be less robust (but may have a higher accuracy) and hence may produce outlier measurements during times of operation with shocks and high vibrations.

In one embodiment, external accelerometer's 280 measurement errors and errors in the relative orientation to IMU 220 are estimated even if the relative orientation between external accelerometer 280 and IMU 220 is only coarsely known (i.e., for example, with an accuracy of 1 to 3 degrees if the knowledge of the relative orientation is based on designs of electronic boards and on the housing of the electronic boards). This means that, in some embodiments, calibration in terms of the relative orientation between external accelerometer 280 and IMU 220 is not needed, which makes the use of external accelerometer 280 in the method particularly flexible. In one embodiment, external accelerometer's 280 measurement errors and errors in the relative orientation to IMU 220 are estimated using states in estimator 240 that represent external accelerometer measurement errors such as bias and scale factor error, or representing the rotation vector of the rotation between an assumed sensor frame and the true sensor frame.

In one embodiment, estimator 240 computes the values of its state variables by computing time updates of the state variables based on (a) the IMU-based dynamic motion information from IMU 220, (b) measurement updates from sensor 260, and (c), if external accelerometer 280 is available and activated, on the additional dynamic motion information from external accelerometer 280.

In one embodiment, estimator 240 integrates over time accelerometer measurements along an axis of external accelerometer 280. In other words, estimator 240 performs a time integration of measurements. More specifically, estimator 240 may integrate over time a specific force along an axis of external accelerometer 280. The term "specific force" refers the quantity measured by an accelerometer, and equals acceleration minus gravitation. The specific force is a force per unit mass.

In one embodiment, estimator 240 acquires data from a plurality of sensors 260. In one embodiment, estimator 240 acquires data from a plurality of external accelerometers 280. In one embodiment, estimator 240 acquires data from a plurality of sensors 260 and a plurality of external accelerometers 280.

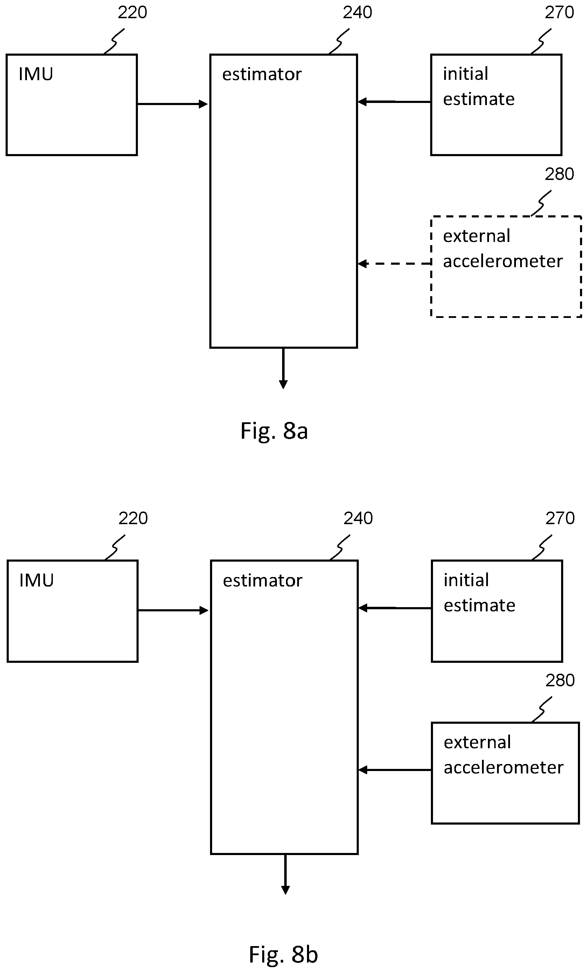

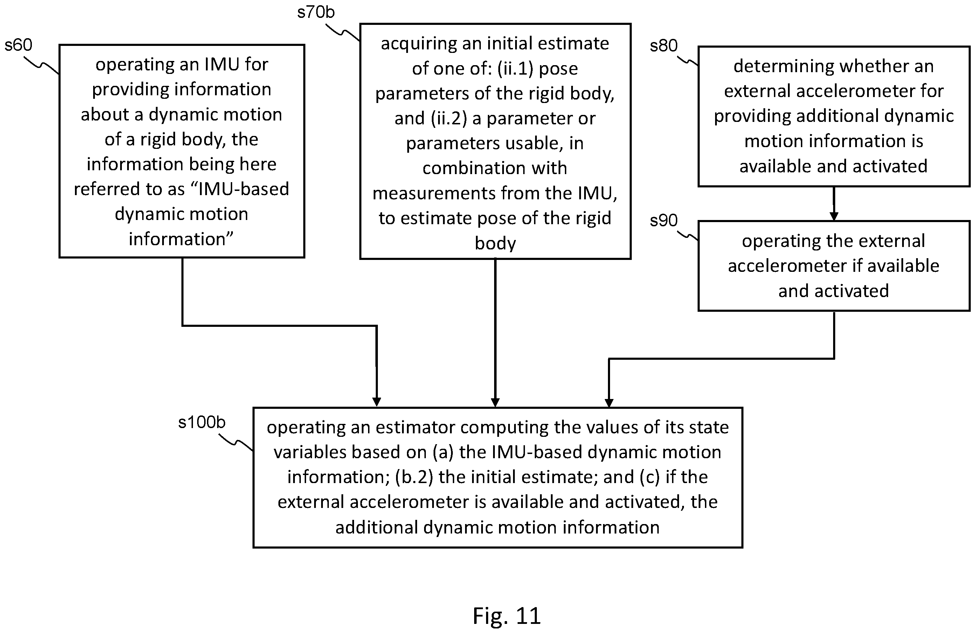

Figs. 8a and 8b are two schematic diagrams of a method in another embodiment of the invention, and Fig. 11 is a corresponding flowchart of that method.

Specifically, in the method schematically illustrated by Figs. 8a, 8b, and 11, instead of operating s70a sensor 260 and operating s100a estimator 240 in such a way that estimator 240 computes the values of its state variables based on, among other data, data from sensor 260, an initial estimate 270 (see Figs. 8a and 8b) is acquired s70b (see Fig. 11) and estimator 240 is operated s100b in such a way that estimator 240 computes the values of its state variables based on, among other data, initial estimate 270. Specifically, initial estimate 270 is an initial estimate of one of following elements (ii.1) and (ii.2), wherein element (ii.1) is pose parameters of the rigid body relative to a reference system that is not attached to the rigid body, and element (ii.2) is a parameter or parameters usable, in combination with measurements from IMU 220, to estimate pose of the rigid body relative to a reference system that is not attached to the rigid body. Initial estimate 270 may for example be a hypothesis (e.g., an educated estimate) or a value read from some memory (e.g., stored after a previous operation). The parameter(s) usable, in combination with measurements from IMU 220, to estimate pose of the rigid body relative to a reference system that is not attached to the rigid body may for example be parameter(s) describing the orientation of the reference system frame with respect to the local vertical direction (gravity direction) vector, or parameter(s) describing a direction (such as the direction from the rigid body to a landmark in the surroundings) with respect to the IMU frame and the reference system frame. Apart from these differences, the method schematically illustrated by Figs. 8a, 8b, and 11 may be as described with reference to Figs. 7a, 7b, and 10.

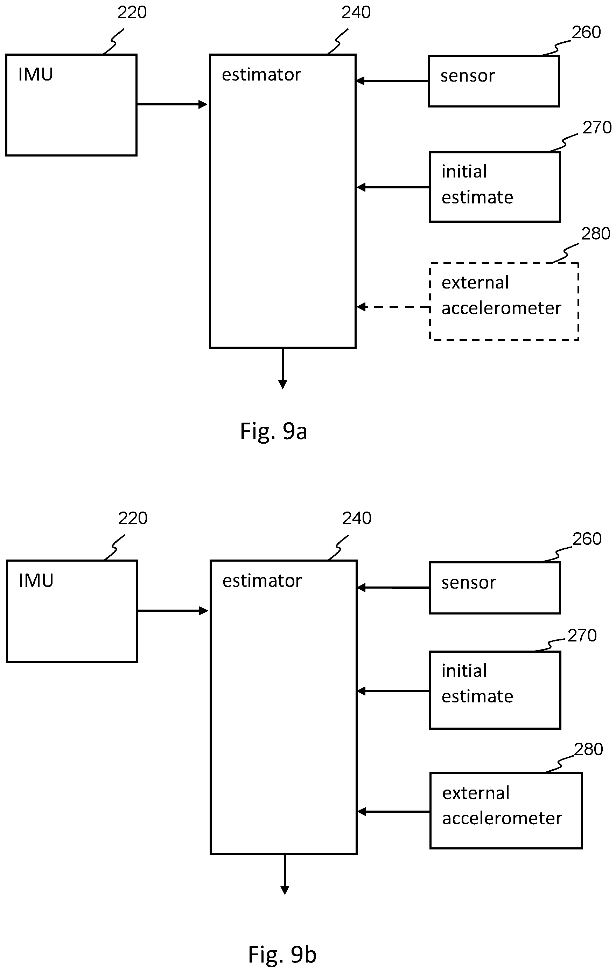

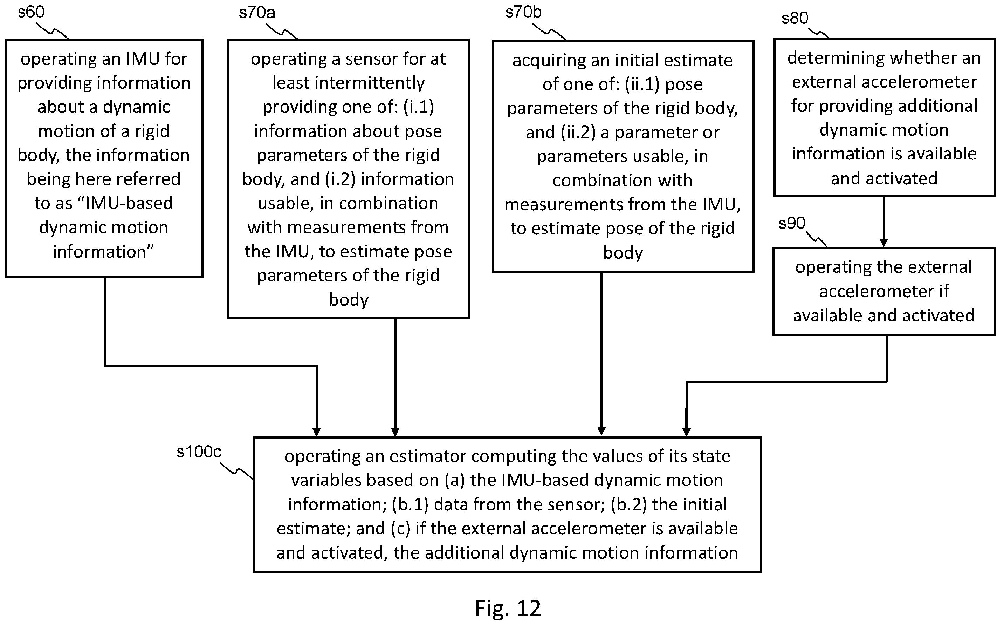

Figs. 9a and 9b are two schematic diagrams of a method in another embodiment of the invention, and Fig. 12 is a corresponding flowchart of that method. Specifically, in the method schematically illustrated by Figs. 9a, 9b, and 12, in addition to operating s70a sensor 260, an initial estimate 270 (see Figs. 9a and 9b) is also acquired s70b (see Fig. 12) and estimator 240 is operated s100c in such a way that estimator 240 computes the values of its state variables based on, among other data, data from sensor 260 and on initial estimate 270. The method schematically illustrated by Figs. 9a, 9b, and 12 therefore combines the features of the methods schematically illustrated by Figs. 7a, 7b, and 10 and by Figs. 8a, 8b, and 11. Reference is therefore made to the above description of these embodiments regarding how the method schematically illustrated by Figs. 9a, 9b, and 12 may be implemented.

In one embodiment, the method comprises operating s70a sensor 260 (as illustrated for example by Figs. 7a, 7b, 9a, 9b, 10, and 12), and sensor 260 comprises: (i) a dual-antenna NSS receiver, and/or (ii) a NSS receiver with a single antenna. In this respect, when it comes to the NSS receiver that sensor 260 may comprise, what has been described above in relation to sensor 160 applies also to sensor 260.

In one embodiment, IMU 220 and external accelerometer 280 are attached to different rigid bodies, and the method further comprises monitoring at least one of element A and element B, wherein element A comprises an orientation and a lever arm of external accelerometer 280 relative to IMU 220, and element B comprises a distance from external accelerometer 280 to IMU 220. Both elements A and B are mounting parameters of external accelerometer 280. That is, in this embodiment, the method may be used for estimating the lever arm between IMU 220 and external accelerometer 280. Besides, in some embodiments, external accelerometer's 280 aiding may be used for improved roll-and-pitch estimation, for improved vertical positioning, and/or for estimating the relative orientation of IMU 220 and external accelerometer 280.

In one embodiment, the rigid body is either a part of a telescopic survey pole (e.g., the upper or low part thereof) or is a survey pole.

In one embodiment, the rigid body is a part of a telescopic survey pole, IMU 220 and external accelerometer 280 are attached respectively to two different parts of the telescopic survey pole that are movable with respect to each other, and the method further comprises outputting an estimate of the telescopic survey pole's height. That is, the method may estimate the telescopic survey pole's length or height, which is a distance from the telescopic survey pole's tip to a point on the upper part of the telescopic survey pole. To do so, external accelerometer 280 may be attached for example to the lower part of the telescopic survey pole, and IMU 220 is attached to the upper part of the telescopic survey, or vice versa. See also explanations of some embodiments in this respect in section B.1 below.

In one embodiment, the rigid body is a survey pole; a survey receiver is rigidly attached to the survey pole (with IMU 220 being part or at least fixedly attached to the survey receiver), the survey pole being non-telescopic or telescopic; an axis, here referred to as "survey pole's axis", is defined as passing through a center of mounting of the survey receiver on the survey pole and through the survey pole's tip; and the method further comprises: (i) outputting an estimation of misalignment of the survey pole's axis with respect to an internal frame of the survey receiver, (ii) outputting an estimation of a position of the survey pole's tip, or (iii) both (i) and (ii). That is, the method may use the additional dynamic motion information from the external accelerometer 280 -in addition to the IMU-based dynamic motion information and data from sensor 260 and/or initial estimate 270- for outputting a position at the tip of the survey pole. The estimation of the survey pole axis misalignment may thus provide improved survey pole tilt compensation. See also explanations of some embodiments in this respect in section B.2 below.

In one embodiment, the above-referred methods are performed at least partially as part of a data post-processing process. In other words, the invention is not limited to a real-time operation. Rather, it may be applied for processing pre-collected data to determine an orientation, a pose, or other information, in post-processing. For example, the observations may be retrieved from a set of data which was previously collected and stored; the processing may be conducted for example in an office computer long after the data collection and thus not in real-time. This also means that initial estimates 170, 270 need not necessarily chronologically first. That is, by "initial", it is not necessarily meant "chronologically first", but this may mean generally the initial operation (i.e., starting point) of the estimation process, no matter if the estimation process is iterating forwards or backwards in time or if the estimation process processes a full batch of sensor data at once. In this context, the term "baseline estimate" may also be regarded as synonymous of the term "initial estimate".

In some embodiments, a method operates (and/or a system is configured to operate) both an external gyroscope 180, if available and activated, and an external accelerometer 280, if available and activated. In other words, the embodiments described with reference to Figs. 1a to 6 and those described with reference to Figs. 7a to 12 may be combined. For example, one embodiment may involve a telescopic survey pole using an external accelerometer 280 for pole height estimation and an external gyroscope 180 for improved heading estimation. In these embodiments, external gyroscope 180 and external accelerometer 280 may, but need not be, available and activated simultaneously.

Further embodiments of the invention will now be described, together with considerations regarding the context in which these embodiments have been developed and regarding how these embodiments may be implemented, for example, by software, hardware, or a combination of software and hardware.

A. Further embodiments using an external gyroscope

In some embodiments, an AINS uses aiding data based on the measurements of one or a plurality of external gyroscopes 180 (a gyroscope is sometimes called simply "gyro" in the following). The external gyro measurements may be preprocessed and then used to update the AINS for improved heading estimation in applications such as machine guidance or vehicle autosteering.

The performance of the AINS heading estimation depends on information available to continuously generate the heading estimate at the current time:

1) Intermittent information about heading, i.e. information valid at an initial time or valid at time instances between the initial time and the current time.
2) Continuous information about heading change, starting from the initial time and continuing to the current time.

The heading change information (above item "2)") is used for propagating the heading information (above item "1)") from the time when it was introduced into the AINS estimation to the current time, thus generating information about the current time heading usable to generate an estimate for the current heading. Continuous information about heading change (above item "2)") is beneficial to the performance of the AINS heading estimation, especially if information about heading (above item "1)") is only sparsely available, for example in GNSS/INS systems with a single antenna.

Existing solutions for AINS heading estimation may use the inertial navigator of the INS for the propagation of heading information, based on measurements of the gyros of the inertial navigator (e.g. the gyros of the IMU for strapdown INS). The INS provides continuous information about heading change.

Compared to the propagation of heading information with the inertial navigator of the INS alone, the methods in some embodiments of the invention, using aiding data based on the measurements of one or a plurality of external gyros 180, have the following advantages:

- the accuracy of heading propagation may be improved;
- a high dynamic range internal gyro (used in the INS) may be combined with a low dynamic range but high accuracy external gyro 180, thus exploiting the complementary qualities of two different sensors; and
- the use of aiding data based on external gyro measurements is optional, allowing the AINS to be used with or without the external gyro 180 depending on the application's needs.

In some embodiments, no modification to the IMU's 120 hardware and data readout or modification of the INS processing is needed for implementing the method. Specifically, in some embodiments, some existing AINS products may be upgraded by merely extending the communication with an interface to the external gyro 180 and extending the AINS software implementation. The mechanical alignment of the external gyro's 180 axis may be estimated and does not necessarily require factory calibration. This is a benefit compared to upgrading the IMU 120 for existing products which may require more modifications in the hardware and software.

In addition to the INS propagation of heading information, some existing AINS estimators may use estimator observations providing information about heading change such as:

- zero heading change or constant heading pseudo-measurements (in the field of navigation, pseudo-measurements refer to synthetic or virtual measurements used to aid the INS for example when GNSS measurements are unavailable or unreliable, e.g. because GNSS signals are obstructed);
- visual odometry delta orientation measurements.

These estimator observations generally do not provide information about heading change continuously but limited to times when the measurements are available and valid.

In some embodiments of the invention, information about heading change is provided to the AINS estimator with the following advantages:

- continuously available and valid measurements from external gyro 180;
- benefit in terms of accuracy and robustness; and
- benefit in terms of processing load.

Let us now provide, in section A.1 below, a description that considers a single external gyro 180 with fixed installation with respect to IMU 120. However, as explained in section A.2, the method can also be used for multiple external gyros 180, each being either mounted fixed to the same rigid body as the rigid body to which IMU 120 is rigidly attached or being mounted with some rotational or translational degree(s) of freedom with respect to the rigid body to which IMU 120 is rigidly attached.

A.1. Single-axis external gyro 180 mounted on the same rigid body as IMU 120

External gyro 180 uses a single-axis sensor and preprocesses the high-rate (e.g. 200Hz) sensor readings to compute delta-angle measurements $\tilde{z}'_i$ at an intermediate data rate suitable for data communication (e.g. $\Delta t_{data}$ = 0.05s):

$$\tilde{z}'_i = \int_{t'_{i-1}}^{t'_i} \widetilde{\omega}_{ext} dt \tag{1}$$

with the time grid of the intermediate data rate being $t'_0, t'_1, \ldots t'_n$, and $t'_i - t'_{i-1} = \Delta t_{data}$.

The measurement $\tilde{z}'_i$ is the delta-angle around the external gyro axis that was accumulated or time-integrated based on the external gyro measurement $\tilde{\omega}_{ext}$ between $t'_{i-1}$ and $t'_i$. A tilde ~ indicates values determined based on the measurements of external gyro 180.

When received in the AINS data preparation, the intermediate rate delta-angle measurements from external gyro 180 are synchronized with the AINS estimator time grid (e.g. $\Delta t_{est}$ = 0.2s):

$$\tilde{z}_k = \int_{t_{k-1}}^{t_k} \widetilde{\omega}_{ext} dt = \sum_{i=a+1}^{i=b-1} \tilde{z}'_i + f_a \tilde{z}'_a + f_b \tilde{z}'_b \tag{2}$$

with the time grid of the AINS estimator being $t_0, t_1, \ldots t_n$, and $t_k - t_{k-1} = \Delta t_{est}$. Parameters $a$ and $b$ are the lowest and largest indices of the intermediate rate measurements $\tilde{z}'_i$ that overlap with the estimator time interval $[t_{k-1}, t_k]$, i.e. $t'_{a-1} < t_{k-1}$ and $t'_a \geq t_{k-1}$ and $t'_{b-1} \leq t_k$ and $t'_b > t_k$. The factors $f_a$ and $f_b$ can be computed for example in linear approximation:

$$f_a = \frac{t'_a - t_{k-1}}{\Delta t_{data}}, f_b = \frac{t_k - t'_{b-1}}{\Delta t_{data}} \tag{3}$$

The AINS, i.e. estimator 140, computes delta-angle vectors in coordinates of a sensor frame $s$ (i.e., external gyro's frame) defined such that the 3rd axis is parallel to the single measurement axis of external gyro 180 and fixed to the rigid body. The delta-angle vectors are computed at the AINS estimator rate based on the INS angular rates in the body frame $b$ which is fixed to the rigid body:

$$\hat{\boldsymbol{z}}_k = \int_{t_{k-1}}^{t_k} \widehat{\boldsymbol{C}}^s_b \widehat{\boldsymbol{\omega}}^b_{ib} dt \tag{4}$$

Values computed based on INS states and IMU measurements are indicated with a hat^. The INS computes the body-frame-to-sensor-frame coordinate transformation DCM $\boldsymbol{C}^s_b$ and the inertial angular rates in body frame co-ordinates $\boldsymbol{\omega}^b_{ib}$.

The AINS estimator measurement ("filter measurement") is the difference of the INS-computed and the measured delta-angle for the single measurement axis of external gyro 180:

$$z_{meas,k} = \boldsymbol{u}^T_3 \hat{\boldsymbol{z}}_k - \tilde{z}_k \tag{5}$$

with the 3rd unit vector $\boldsymbol{u}_3$ = [0 0 1]$^T$, the inertial angular rate vector is projected to the measurement axis of external gyro 180.

A linear observation model is defined that relates the filter measurement $z_{meas}$ with the AINS estimator state vector $x_{AINS}$ in a linear equation (truncating higher order terms:

$$z_{meas,k} \doteq H_k x_{AINS,k} + v_k \qquad (6)$$

with the observation matrix H ("measurement matrix") and the measurement noise $v$.

The linear observation model is derived in the following by linearization of the filter measurement:

$$u_3^T \hat{z}_k - \tilde{z}_k = u_3^T \int_{t_{k-1}}^{t_k} \widehat{C}_b^s \widehat{\omega}_{ib}^b dt - \int_{t_{k-1}}^{t_k} \widetilde{\omega}_{ext} dt \qquad (7)$$

The external gyro measurement $\widetilde{\omega}_{ext}$ is related to the true inertial angular rate of the rigid body $\omega_{ib}$ and measurement errors with the following linear model:

$$\widetilde{\omega}_{ext} \doteq (1 + \epsilon_{ext}) u_3^T C_b^s \omega_{ib}^b + \delta\omega_{ext} + v_{ext} \qquad (8)$$

with the external gyro measurement errors $\varepsilon_{ext}$ (scale factor error), $\delta\omega_{ext}$ (bias error) and $v_{ext}$ (noise). The operator $\doteq$ means in linear approximation equals to.

Similarly, a linear model is introduced to relate the INS-computed inertial angular rate vector to the true inertial angular rate:

$$\widehat{\omega}_{ib}^b \doteq (1 + \Gamma_{IMU}) \omega_{ib}^b + \delta\omega_{IMU}^b + v_{IMU}^b \qquad (9)$$

with the matrix of IMU gyro scale factor, misalignment and nonorthogonality errors being $\Gamma_{IMU}$, the IMU gyro biases being $\delta\omega_{IMU}^b$, and the IMU gyro noise vector being $v_{IMU}^b$. The multiplication with $\Gamma_{IMU}$ is rearranged as follows, defining the vector of IMU gyro scale factor, misalignment and nonorthogonality errors $\gamma_{IMU}$:

$$\Gamma_{IMU} \omega_{ib}^b = \begin{bmatrix} \omega_x & 0 & 0 & -\omega_z & \omega_y & 0 & 0 & 0 & 0 \\ 0 & \omega_y & 0 & 0 & 0 & \omega_z & -\omega_x & 0 & 0 \\ 0 & 0 & \omega_z & 0 & 0 & 0 & 0 & -\omega_y & \omega_x \end{bmatrix} \begin{bmatrix} \epsilon_x \\ \epsilon_y \\ \epsilon_z \\ \gamma_{xy} \\ \gamma_{xz} \\ \gamma_{yx} \\ \gamma_{yz} \\ \gamma_{zx} \\ \gamma_{zy} \end{bmatrix} \qquad (10)$$

$$= W(\omega_{ib}^b) \gamma_{IMU}$$

With equation (10), the error model (9) becomes

$$\widehat{\omega}_{ib}^b \doteq \omega_{ib}^b + W(\omega_{ib}^b) \gamma_{IMU} + \delta\omega_{IMU}^b + v_{IMU}^b \qquad (11)$$

The INS-computed $b$-to-$s$ transformation DCM is related to the true DCM as $\widehat{C}_b^s = C_s^{\hat{s}} C_b^s$ with the linear approximation of the misalignment DCM $C_s^{\hat{s}} \doteq I + [\phi_s \times]$ and sensor frame misalignment vector $\phi_s$.

The linear error models are inserted into the equation for the filter measurement:

$$\boldsymbol{u}_3^T \hat{\boldsymbol{z}}_k - \tilde{z}_k \doteq \boldsymbol{u}_3^T \int_{t_{k-1}}^{t_k} (I + [\boldsymbol{\phi}_s \times]) \boldsymbol{C}_b^s \big(\omega_{ib}^b + W(\omega_{ib}^b)\gamma_{IMU} + \delta\omega_{IMU}^b$$

$$+ \boldsymbol{v}_{IMU}^b\big)dt - \int_{t_{k-1}}^{t_k} \Big((1 + \epsilon_{ext})\boldsymbol{u}_3^T \boldsymbol{C}_b^s \omega_{ib}^b + \delta\omega_{ext} + v_{ext}\Big)dt \tag{12}$$

The terms are rearranged, dropping higher order combinations of error parameters:

$$\boldsymbol{u}_3^T \hat{\boldsymbol{z}}_k - \tilde{z}_k \doteq \boldsymbol{u}_3^T \boldsymbol{C}_b^s \int_{t_{k-1}}^{t_k} W(\omega_{ib}^b)\gamma_{IMU}dt + \boldsymbol{u}_3^T \boldsymbol{C}_b^s \int_{t_{k-1}}^{t_k} \delta\omega_{IMU}^b dt$$

$$- \boldsymbol{u}_3^T \left[\int_{t_{k-1}}^{t_k} \boldsymbol{C}_b^s \omega_{ib}^b dt \times\right] \boldsymbol{\phi}_s - \boldsymbol{u}_3^T \boldsymbol{C}_b^s \int_{t_{k-1}}^{t_k} \epsilon_{ext}\omega_{ib}^b dt \tag{13}$$

$$- \int_{t_{k-1}}^{t_k} \delta\omega_{ext}dt + \int_{t_{k-1}}^{t_k} (v_{IMU} - v_{ext})dt$$

where the parameters $\boldsymbol{C}_b^s$ and $\phi_s$ were assumed to be constant in time. The IMU gyro noise, i.e. the noise of the gyroscopes of IMU 120, is assumed to be anisotropic, hence $\boldsymbol{u}_3^T \boldsymbol{C}_b^s \boldsymbol{v}_{IMU}^b = v_{IMU}$ .

The AINS estimator state vector $\boldsymbol{x}_{AINS}$ may comprise states for $\delta\omega_{IMU}^b$ and $\gamma_{IMU}$ for the estimation of IMU gyro errors. $\boldsymbol{x}_{AINS}$ is augmented with states for $\phi_s$ (external gyro sensor frame misalignment), $\varepsilon_{ext}$ (external gyro scale factor error) and $\delta\omega_{ext}$ (external gyro bias) for using the observation model derived above.

Depending on the rate of change of the states $\delta\omega_{IMU}^b$, $\gamma_{IMU}$, $\varepsilon_{ext}$ and $\delta\omega_{ext}$ (which are in general not constant in time), additional states for the integral terms in the observation model may be added to the AINS estimation, i.e. to estimator 140. If the states are approximately constant over the estimator time interval, the following approximation may be used:

$$\boldsymbol{u}_3^T \hat{\boldsymbol{z}}_k - \tilde{z}_k \doteq \Delta t_{est}\boldsymbol{u}_3^T \boldsymbol{C}_b^s W(\omega_{ib}^b)\gamma_{IMU} + \Delta t_{est}\boldsymbol{u}_3^T \boldsymbol{C}_b^s \delta\omega_{IMU}^b$$

$$- \boldsymbol{u}_3^T \left[\int_{t_{k-1}}^{t_k} \boldsymbol{C}_b^s \omega_{ib}^b dt \times\right] \boldsymbol{\phi}_s - \boldsymbol{u}_3^T \int_{t_{k-1}}^{t_k} \boldsymbol{C}_b^s \omega_{ib}^b dt \,\epsilon_{ext} \tag{14}$$

$$- \Delta t_{est}\delta\omega_{ext} + v_k$$

with $v_k = \mathcal{N}(0, (ARW_{IMU} + ARW_{ext})\sqrt{\Delta t_{est}})$ assumed as the uncorrelated white measurement noise $v_k$ of the AINS estimator observation $z_{meas,k}$. The angle random walk (ARW) parameters of the IMU gyro $ARW_{IMU}$ and of external gyro 180 $ARW_{ext}$ are combined. Note that assuming that the IMU gyro noise is uncorrelated (with the AINS states) neglects that the same noise is integrated in the INS to propagate the orientation and hence the true orientation error. A more exact approach is known in the art for example for the Kalman filter (see [6]).

Note that INS-computed delta-angle vector can be used as an approximation in the observation model:

$$\int_{t_{k-1}}^{t_k} C_b^s \omega_{ib}^b dt \approx \hat{z}_k$$

Similarly, $C_b^s \approx \widehat{C}_b^s$ and $W(\omega_{ib}^b) \approx W(\widehat{\omega}_{ib}^b)$.

A.2. Multiple external gyros 180 mounted on the same rigid body as IMU 120 or with some rotational or translational degree(s) of freedom with respect thereto

In some embodiments, the method as described in above section A.1. is used with multiple external gyros 180, each being mounted fixed to the same rigid body as the rigid body to which IMU 120 is rigidly attached or being mounted with some rotational degree of freedom with respect the rigid body to which IMU 120 is rigidly attached. With multiple, i.e. a plurality of, external gyros 180 being used, a combination of (i) one or more external gyros 180 mounted fixed to the same rigid body as the rigid body to which IMU 120 is rigidly attached and (ii) one or more external gyros 180 mounted with some rotational degree of freedom with respect the rigid body to which IMU 120 is rigidly attached, may also, in some embodiments, be used.

In the case where the multiple external gyros 180 are mounted with some rotational degree of freedom with respect to the rigid body to which IMU 120 is mounted, the relative rotational motion about the degree of freedom is measured or estimated, e.g. by measuring the rotation angle or by measuring and integrating angular rate about this degree of freedom and using this to dynamically compute the IMU-to-external sensor orientation (body-frame-to-sensor-frame coordinate transformation DCM in equation (4)). Note that, in addition, any translational motion between the rigid body and an external gyro 180 can be allowed because a translation motion does not affect the measurements or the method.

B. Further embodiments using an external accelerometer

Some embodiments of the invention relate to methods for aiding an inertial navigation system (INS) with an external accelerometer 280. Some methods may allow, for example and without being limited thereto, for estimation of the translation and rotation between IMU 220 of the INS and external accelerometer 280 and/or, more generally, may allow for estimation of pose parameters as explained above. With, for example, a small and low-cost MEMS accelerometer 280, this may be used for estimating the height of a telescopic survey pole or for estimating the misalignment of the pole with respect to the survey receiver for tilt compensation.

Typically, the surveyor measures the length of the telescopic survey pole (by reading the scale on the pole) and enters it manually into the survey field software. This is prone to user error, e.g. forgetting to read and enter the new value after changing the pole length.

Methods in some embodiments of the invention are able to estimate the telescopic pole height on a continuous scale (i.e., wherein the height values can be any point within the range, not just predetermined steps), and the accuracy is determined by the external accelerometer's 280 quality and the motion the survey pole is subjected to. The typical survey workflow with a pole provides enough motion for good observability of lever arm in the AINS estimation, i.e. in estimator 240.

In addition, the method provides, in some embodiments, an effective way to estimate the misalignment of the survey pole axis with respect to the internal frame of the survey receiver and this may be used to improve quality and accuracy of survey pole tilt compensation. An existing method for pole misalignment calibration requires the user to execute a specific field procedure with RTK under open sky. The method according to some embodiments of the invention works indoors, e.g. in a building or in a tunnel, and does not require additional specific field procedures. Another limitation of existing solutions for survey pole misalignment calibration is that the calibration is only valid if the pole is attached to the survey receiver with the same azimuth angle. Since some means of quick attachment mechanisms for poles and receivers do not ensure a fixed azimuth mounting, it is another benefit of the method of some embodiments of the invention that this is not needed.

B.1. Using an external accelerometer for estimating telescopic pole height:

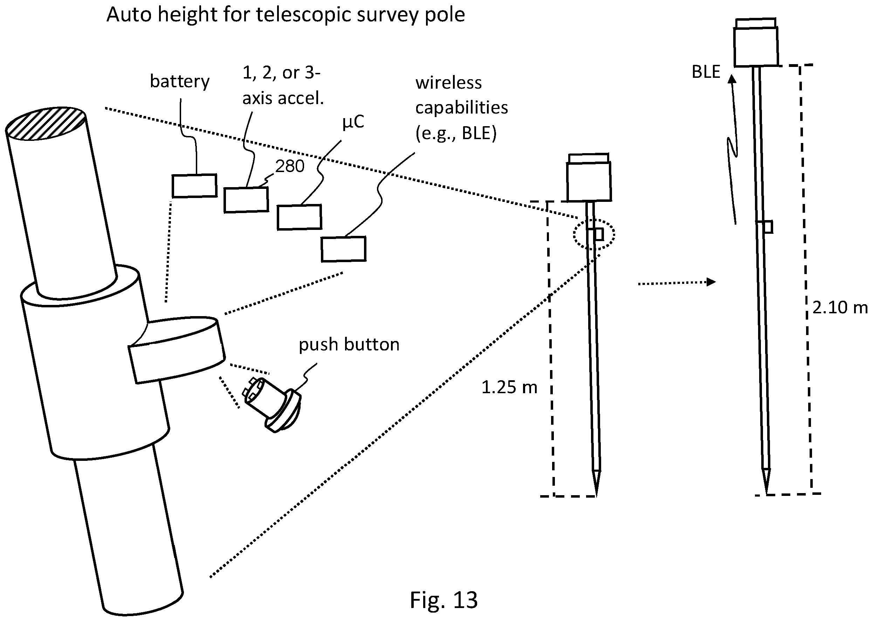

In one embodiment, a plurality of units, hereinafter referred to as "electronic package", comprising MEMS accelerometer 280 (single, dual axis or 3D), microcontroller (labelled "μC" in Fig. 13), wireless communication, power supply, and a push button may be integrated into the clamp mechanism of a telescopic survey pole as schematically illustrated in Fig. 13.

The push button may be integrated with the clamp mechanism such that it can indicate whenever the clamp is opened (and the pole height can change) or whenever the clamp is fixed (and the pole height is fixed).

The wireless communication may provide clock synchronization between the survey receiver and the electronic package for the timestamping of the external accelerometer measurements. Clock synchronization with sufficient accuracy is desirable for sensor fusion in the AINS estimation, i.e. in estimator 240. The method may be capable of handling latency of the external sensor (i.e., external accelerometer 280) data due to potential processing and communication delays. Furthermore, the method does not require that the external sensor (i.e., external accelerometer 280) measurements are available for processing at the same time as measurements from IMU 220, and it does not require that the external sensor (i.e., external accelerometer 280) measurements and IMU measurements are valid at the same points in time and with the same rate.

The electronic package sends the (possibly pre-integrated) accelerometer measurement data and the indication of button to the survey receiver on the pole. On this device, an AINS as described in a later section below is processing the data and produces estimates of lever arm from a receiver point of reference to the accelerometer 280. The information from the push button is used in the AINS estimation to correctly account for lever arm changes when the clamp is opened.

Combining the lever arm estimate with a measurement (e.g. tape measure) of the constant length from the accelerometer installation location to the pole tip, the telescopic pole height (from the survey receiver mounting to the pole tip) can be estimated.

The method may work independently of the precise positioning in the survey receiver, i.e. it does not require GNSS or RTS. The method may also handle small misalignment and measurement errors of external accelerometer 280. Indeed, as explained above, external accelerometer's 280 measurement errors and errors in the relative orientation to IMU 220 may be estimated.


B.2. Using an external accelerometer for pole axis misalignment calibration with a tilt-compensation survey receiver:

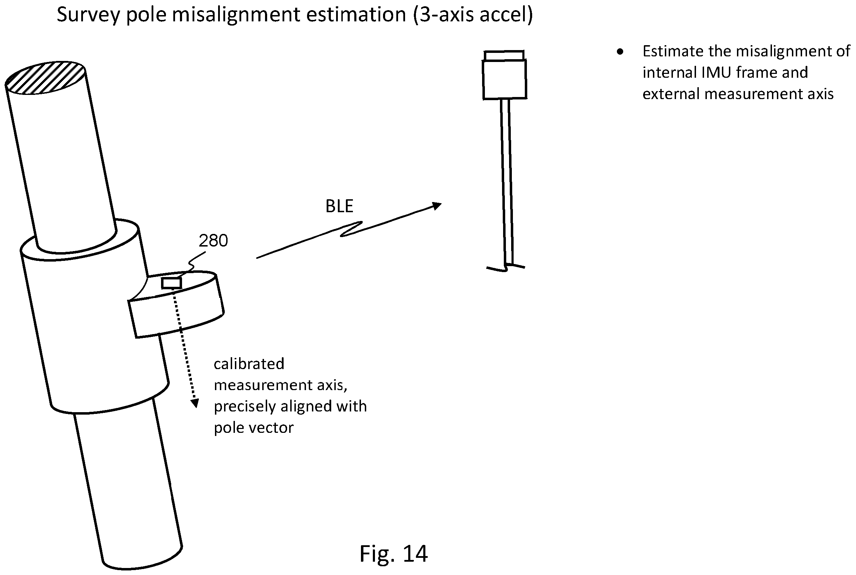

The above-described electronic package may also be used, in some embodiments, on survey poles (including non-telescopic poles, i.e. with no push button or clamp mechanism) and with tilt-compensation survey receivers for estimating the misalignment of the internal frame of the survey receiver and the survey pole axis (directed from the center of the mounting to the pole tip), as schematically illustrated in Fig. 14. A tilt-compensation survey receiver is a type of NSS receiver, or a survey receiver receiving measurements from a robotic total station (RTS), used in surveying that can accurately measure or stake out points even when the survey pole is tilted. A tilt-compensation survey receiver may use an IMU for estimating position and orientation. The tilt-compensated position of the survey pole's tip may be computed using the position and orientation of the survey receiver and the length and direction of the attached survey pole. The direction of the survey pole's axis may be represented by one of the axes of the internal frame of the survey receiver. This direction may be assumed based on the geometry of the survey receiver, the installation of the IMU and the connection of the survey receiver to the survey pole (e.g. assumed to be orthogonal to the pole mounting surface on the survey receiver).

In one embodiment, an estimate of the misalignment of the internal frame of the survey receiver and the survey pole axis is used to improve the estimation of tilt-compensated position of the survey pole's tip (for example by correcting the internal frame of the survey receiver which in turn improves the survey pole tilt correction to the position measurement). Here, the internal frame of the survey receiver may be a frame oriented such that one axis is pointing in direction of the survey pole axis. For example, the x axis or the z axis of the internal frame points in a direction parallel to the survey pole axis. The relative orientation of the internal frame of the survey receiver and the IMU frame may be known for example from the CAD model of the survey receiver including the pole mounting surface and the IMU installation.

In one embodiment, one of the measurement axes of external accelerometer 280 is aligned with the survey pole axis by some means. For example, the external accelerometer 280 may be attached to the survey pole using a mechanical mount such that one measurement axis points in direction of the survey pole axis. The external accelerometer 280 may be single-axis provided that the single measurement axis is aligned with the survey pole axes.

In one embodiment, the misalignment estimation benefits from a precise calibration of the external accelerometer 280 such that it produces measurements in direction of a calibrated measurement axis that is aligned with the survey pole axis. Using a three-axis external accelerometer 280 in one embodiment, this calibration can be produced through a manual procedure and computed as a linear combination of the three components of the original three-axis external accelerometer sensor outputs (resulting in a single calibrated measurement component in direction of a calibrated measurement axis).

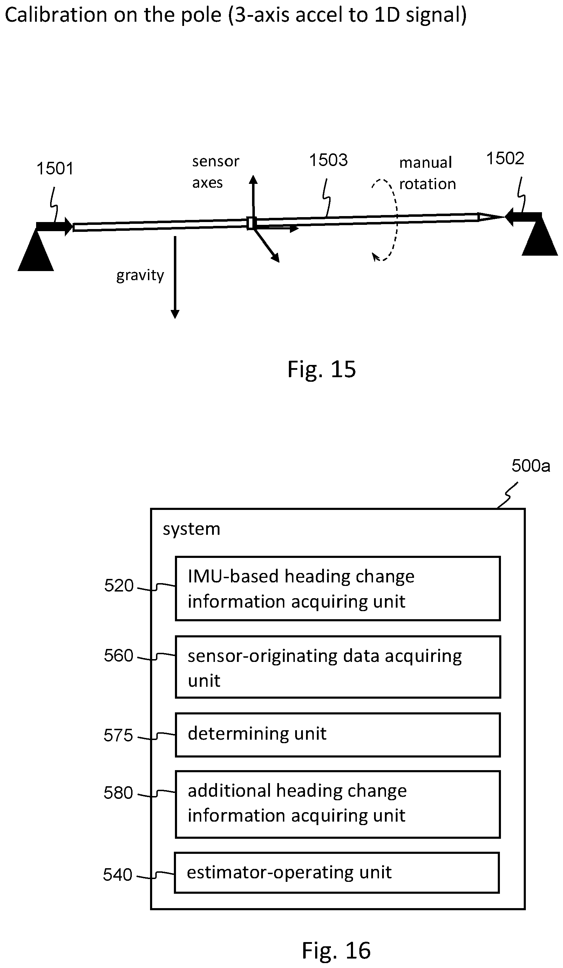

Fig. 15 shows an example of a calibration rig where the survey pole 1503 is mounted between two fixtures 1501, 1502 and can be rotated about the survey pole's axis. The calibration uses the measurements from the three-axis external accelerometer 280 while survey pole 1503 is rotated in the calibration rig. The rotation may be manual or automated in some way, e.g. using a motor in one of the fixtures 1501, 1502 or in each of them. The external sensor measurement data may be processed in real-time or first recorded and then post-processed to produce the calibration. The linear combination for calibrating external accelerometer 280 may be computed by using a method minimizing the sum of squares of differences of (A) the linear combination of 3D measurements for each of the measurement samples collected during the survey pole rotation and (B) the average over all samples of the same linear combination. This is described in more detail below.

It is not necessary that survey pole 1503 is exactly horizontal for this calibration. In one embodiment, the calibration rig may hold survey pole 1503 at a low angle (for example less than 10° with respect to the horizontal) for better accuracy of the calibration (a better accuracy is achieved because a larger part of gravity is directed perpendicular to the survey pole's axis which results in better signal-to-noise ratio of the measurements used for calibration).

The kinematic acceleration measured by external accelerometer 280 as survey pole 1503 is rotated in the calibration procedure appears only in directions not parallel to the survey pole's axis, and the kinematic acceleration is eliminated in the linear combination as well.

The computed calibration is then applied to the 3D external accelerometer measurements to compute a 1D external accelerometer output for improving the accuracy of the above-described method for tilt-compensation thanks to a more accurate estimation of the misalignment of the internal frame of the survey receiver and the survey pole axis.

The calibrated external accelerometer output is computed as follows

$$\tilde{f}_{cal} = [c_x \quad c_y \quad c_z]^T \cdot \tilde{\boldsymbol{f}}_s(S) \tag{15}$$

With $\tilde{f}_s(S)$ the three-axis measurement of the external accelerometer 280, which is described in more detail in the following section B.3., see equation (20). $c_x$, $c_y$ and $c_z$ are the three scalar calibration parameters, and the calibrated external accelerometer measurement $f_{cal}$ is a linear combination of the measurements of the individual three measurement axes of the external accelerometer 280.

Using the measurement samples $\tilde{f}_s(S)|_k$ collected during the survey pole rotation with $k = 1 \ldots N$ the index of the $N$ collected measurement samples, the calibration parameters $c_x$, $c_y$ and $c_z$ are computed so as to minimize the following cost function $J$ (using a known method for least-squares optimization):

$$J = \sum_{k=1}^{N} \left( [c_x \quad c_y \quad c_z]^T \cdot \tilde{\boldsymbol{f}}_s(S)\Big|_k - \bar{f} \right)^2 \tag{16}$$

with the average $\bar{f} = \frac{1}{N}\sum_{i=1}^{N}[c_x \quad c_y \quad c_z]^T \cdot \tilde{\boldsymbol{f}}_s(S)\Big|_i$. Since the cost function $J$ is zero for zero values of the calibration parameters $c_x$, $c_y$ and $c_z$, it is necessary to constrain the solution. Simple possibilities are to require that the square sum of $c_x$, $c_y$ and $c_z$ equals 1, or constraining the value of a single calibration parameter (for example set $c_x = 1$ if the corresponding external accelerometer measurement axis is parallel to the survey pole's axis with better than 3° accuracy).

B.3. Aided INS using external accelerometer measurements for improved state estimation and estimation of mounting parameters:

External accelerometer 280 measures the specific force vector f(S) at the sensor location S (i.e., the location of external accelerometer 280). This can be written in the coordinates of the body frame $b$ as:

$$\boldsymbol{f}_b(S) = \boldsymbol{f}_b + \boldsymbol{\omega}_{ib} \times (\boldsymbol{\omega}_{ib} \times \boldsymbol{l}_b) + \dot{\boldsymbol{\omega}}_{ib} \times \boldsymbol{l}_b - \boldsymbol{C}_e^b \Delta \boldsymbol{g}_{e,earth} \tag{17}$$

with the specific force vector at the navigation center being $f_b$, the inertial angular rates vector being $\omega_{ib}$, the lever arm vector $l_b$ pointing from the navigation center to the sensor location S, the Earth-to-body frame DCM $\boldsymbol{C}_e^b$ and the difference of Earth gravitation vectors at the sensor location and the navigation center being $\Delta \boldsymbol{g}_{e,earth}$. The above expression is derived in section B.5 below.

The specific force vector at the navigation center and the inertial angular rates vector can be measured with IMU 220. However, the measurement noise of the gyroscopes would be amplified by computing a time derivative $\dot{\omega}_{ib}$ (due to the typically high-frequency bandwidth of gyroscope measurement noise, where high-frequency content of the noise signal is strongly amplified in a time differentiation). Therefore, the external accelerometer aiding may be implemented using time integration over sequential time intervals between time points $t_0$, $t_1$, ... etc., which are the time grid of the AINS estimator. The preprocessing of high-rate readings from external accelerometer 280 to reduce to an intermediate data rate suitable for data communication, followed by synchronization with AINS estimator time grid in the data preparation, follows in accordance with what has been described for external gyro aiding data in above section A.

Define the delta-velocity vector as time integrated body-frame specific force vector at S, in an interval between two consecutive time points of the AINS estimator time grid $t_{k-1}$ and $t_k$.

$$z_k = \int_{t_{k-1}}^{t_k} f_b(S)dt$$

$$= \int_{t_{k-1}}^{t_k} f_b dt + \int_{t_{k-1}}^{t_k} \boldsymbol{\omega}_{ib} \times (\boldsymbol{\omega}_{ib} \times \boldsymbol{l}_b)dt + [\boldsymbol{\omega}_{ib} \times \boldsymbol{l}_b]_{t_{k-1}}^{t_k} \qquad (18)$$

$$- \int_{t_{k-1}}^{t_k} C_e^b \Delta g_{e,earth} dt$$

The AINS, i.e. estimator 240, computes the following approximation of the delta-velocity vector $z_k$, neglecting the gravitation vector difference:

$$\hat{z}_k = \underbrace{\int_{t_{k-1}}^{t_k} \hat{f}_b dt + \int_{t_{k-1}}^{t_k} \hat{\boldsymbol{\omega}}_{ib} \times (\hat{\boldsymbol{\omega}}_{ib} \times \hat{\boldsymbol{l}}_b)dt}_{compute\ at\ high\ rate} + \underbrace{[\hat{\boldsymbol{\omega}}_{ib} \times \hat{\boldsymbol{l}}_b]_{t_{k-1}}^{t_k}}_{compute\ at\ estimator\ rate} \qquad (19)$$

where computed values are denoted by a hat^. The first two terms benefit from high-rate integration for good accuracy, and this is appropriately implemented at the data rate of IMU 220. The last term is a difference between time $t_{k-1}$ and time $t_k$, which may be computed using stored data for $t_{k-1}$ when the estimator measurement is prepared.

External accelerometer 280 measures specific force along the axes of the sensor frame s (i.e., the external accelerometer's frame) and is written as vector $\tilde{f}_s(S)$, where the~ denotes a sensor measurement (i.e., external accelerometer's measurement):

$$\tilde{f}_s(S) = C_b^s f_b(S) + \delta f_s + v_s \qquad (20)$$

with the constant body-to-sensor frame DCM $C_b^s$ and external accelerometer measurement errors $\delta f_s$ and noise $v_s$ (Note that $\delta f_s$ and $v_s$ are the external accelerometer errors, whereas $\delta f_b$ and $v_b$ are the errors of the IMU specific force measurement in the following. The quantities are independent, and it cannot be assumed that e.g. $\delta f_s = C_b^s \delta f_b$ ).

In the measurement data processing, the external accelerometer measurement is time-integrated over the same time intervals as the AINS computed delta-velocity vector $\hat{z}_k$. The integrated external accelerometer measurement is related to the true delta-velocity vector $z_k$ as follows:

$$\int_{t_{k-1}}^{t_k} \tilde{f}_s(S)dt = C_b^s z_k + \int_{t_{k-1}}^{t_k} (\delta f_s + v_s)dt \qquad (21)$$

The AINS estimator measurement for time $t_k$ is defined as

$$z_{meas,k} = \widehat{C}_b^s \hat{z}_k - \int_{t_{k-1}}^{t_k} \tilde{f}_s(S)dt \qquad (22)$$

Note that the measurement is cast in coordinates of sensor frame s, which allows reduction to a 2D or 1D model if external accelerometer 280 has only one or two measurement axes. The following does not assume or require 3D sensor measurements from external accelerometer 280. (Note: It is possible to use 3D measurements from external accelerometer 280 as well with this method. This is described in the following equations, and the reduction for 2D or 1D measurements follows by reducing the dimensionality of equation (22), i.e. ignoring rows in that vector equation.)

The estimator measurement $z_{meas,k}$ is related to errors in the measured and computed values as follows:

$$z_{meas,k} = \left(I - C_b^s \widehat{C}_b^{s\,T}\right) \widehat{C}_b^s \hat{z}_k + \widehat{C}_b^s(\hat{z}_k - z_k) - \int_{t_{k-1}}^{t_k} (\delta f_s + v_s)dt$$

$$\underbrace{- \left(I - C_b^s \widehat{C}_b^{s\,T}\right) \widehat{C}_b^s(\hat{z}_k - z_k)}_{H.O.T.}$$

(23)

The error in the computed body-to-sensor frame DCM is represented as sensor frame misalignment $I - C_b^s \widehat{C}_b^{s\,T}$. If the sensor frame misalignment (i.e., the misalignment of the external accelerometer's frame) is not negligible, the higher-order term in the equation above will result in modeling error for linear estimators.

Depending on the quality and number of measurement axes of external accelerometer 280, the sensor error $\delta f_s$ (i.e., the external accelerometer's error) can be represented by a linear model with adequate number of augmented states in the state estimation, which may include bias, scale factor error and misalignment states.

The integrated external accelerometer noise $\int_{t_{k-1}}^{t_k} v_s dt$ can be lumped into the variance of the estimator measurement.

The error in the computed $\hat{z}_k$ is

$$\hat{z}_k - z_k = \int_{t_{k-1}}^{t_k} (\delta f_b + v_b)dt$$

$$+ \int_{t_{k-1}}^{t_k} \left(\widehat{\omega}_{ib} \times \left(\widehat{\omega}_{ib} \times \hat{l}_b\right) - \omega_{ib} \times (\omega_{ib} \times l_b)\right) dt$$

$$+ \left[\delta \omega_{ib} \times \hat{l}_b + \widehat{\omega}_{ib} \times \delta l_b - \delta \omega_{ib} \times \delta l_b\right]_{t_{k-1}}^{t_k}$$

$$+ \int_{t_{k-1}}^{t_k} C_e^b \Delta g_{e,earth} dt$$

(24)

The first right-hand side (RHS) term integrates the IMU specific force error and noise which are input into the AINS error process model as well. The AINS estimator may comprise states for representing IMU specific force error $\delta f_b$ with a linear model of adequate fidelity for the given IMU quality. This input of IMU specific noise to the process model and the measurement (as time integral) are handled in the state estimation.

In the third RHS term, the lever arm error vector $\delta l_b$ is observed.

The IMU inertial angular rate error $\delta \omega_{ib}$ is handled in a similar manner as the IMU specific force error, accounting for the various components of error with the gyro error model and noise models. (Note: $\delta \omega_{ib}$ is the combination of a noise term and correlated errors in this description)

The error in centripetal acceleration integrals can be written as

$$\int_{t_{k-1}}^{t_k} \left(\widehat{\omega}_{ib} \times \left(\widehat{\omega}_{ib} \times \hat{l}_b\right) - \omega_{ib} \times (\omega_{ib} \times l_b)\right) dt$$

$$= \int_{t_{k-1}}^{t_k} \left(\widehat{\omega}_{ib} \times (\widehat{\omega}_{ib} \times \delta l_b) + \delta \omega_{ib} \times \left(\widehat{\omega}_{ib} \times \hat{l}_b\right) + \widehat{\omega}_{ib} \times \left(\delta \omega_{ib} \times \hat{l}_b\right)\right.$$

$$\underbrace{- \delta \omega_{ib} \times \left(\delta \omega_{ib} \times \hat{l}_b\right)}_{H.O.T.}$$

(25)

$$\left.\underbrace{- \delta \omega_{ib} \times (\widehat{\omega}_{ib} \times \delta l_b) - \widehat{\omega}_{ib} \times (\delta \omega_{ib} \times \delta l_b) + \delta \omega_{ib} \times (\delta \omega_{ib} \times \delta l_b)}_{H.O.T.}\right) dt$$

The first term of the RHS integral can be modeled in a linear estimator but benefits from sufficiently high sampling to resolve dynamics in the angular rates. The second and third terms are linear in inertial angular rate error which is input into the AINS error process model as well. Consequently, the correlation should be accounted for in the state estimation.

Numerical errors in the time integration of sensor measurement (i.e., external accelerometer's measurement) and AINS computed data should be accounted for in the variance of the AINS estimator measurement update.

B.4. Appendix: Preliminaries

In scope of terrestrial inertial navigation, the specific force that can be measured with an accelerometer in coordinates of a body fixed frame $b$ is commonly described as the difference of kinematic acceleration and gravitation (in accordance with classical mechanics):

$$f_b = C_i^b \ddot{x}_i - C_e^b g_{e,earth} \qquad (26)$$

with the inertial-to-body frame DCM $C_i^b$ and the Earth-to-body frame DCM $C_e^b$. Furthermore, $x_i$ is the accelerometer position with respect to the center of the Earth in coordinates of the inertial (ECI) frame $i$ and $g_{e,earth}$ is the difference of gravitation from all masses at the accelerometer position and at the center of the Earth (which is assumed to coincide with the center of mass of the Earth).

Earth gravity $\gamma_e$ commonly used in terrestrial navigation methods is defined as:

$$\gamma_e = g_{e,earth} - \omega_{ie} \times (\omega_{ie} \times x_e) \qquad (27)$$

with the Earth rate vector $\omega_{ie}$ that is assumed constant in the scope of this description.

It can be shown that

$$\ddot{x}_e = \frac{d^2}{dt^2}(C_i^e x_i) = C_i^e \ddot{x}_i - \omega_{ie} \times (\omega_{ie} \times x_e) - 2\omega_{ie} \times \dot{x}_e \qquad (28)$$

using the time derivative of the inertial-to-Earth frame DCM $\frac{d}{dt}C_i^e = C_i^e[\omega_{ie} \times]$ with the skew symmetric matrix of the Earth rate vector $[\omega_{ie} \times]$.

B.5. Appendix: Derivation of the specific force at sensor location

(Note: In this section, "sensor" refers to the external sensor being external accelerometer 280.)

With the above preliminaries in section B.4, the terrestrial inertial navigation equation for Earth frame velocity vector at the sensor location S is:

$$\dot{v}_e(S) = C_b^e f_b(S) + \gamma_e(S) - 2\omega_{ie} \times v_e(S) \qquad (29)$$

with the body frame specific force vector at the sensor location $f_b(S)$, the Earth frame gravity vector at the sensor location $\gamma_e(S)$, Earth rate vector $\omega_{ie}$, and the Earth frame velocity vector of the sensor $v_e(S)$. Refactoring this equation gives:

$$f_b(S) = C_e^b(\dot{v}_e(S) - \gamma_e(S) + 2\omega_{ie} \times v_e(S)) \qquad (30)$$

The Earth frame velocity vector of the sensor is related to the velocity of the navigation center $v_e$ as follows:

$$v_e(S) = \frac{d}{dt}(x_e + C_b^e l_b) = v_e + C_b^e(\omega_{eb} \times l_b) \qquad (31)$$

where $x_e$ is the Earth frame position vector of the navigation center, $C_b^e$ is the body-to-Earth frame DCM, and $\omega_{eb}$ is the angular rates vector of the body frame relative to the Earth frame. The lever arm vector $l_b$ pointing from the navigation center to the sensor location S is constant in body frame coordinates:

$$\boldsymbol{l}_b = \boldsymbol{C}_e^b(\boldsymbol{x}_e(S) - \boldsymbol{x}_e) = const. \tag{32}$$

with the Earth frame position vector of the sensor $\boldsymbol{x}_e(S)$.

The sensor velocity vector time derivative is

$$\dot{\boldsymbol{v}}_e(S) = \dot{\boldsymbol{v}}_e + \boldsymbol{C}_b^e\big(\boldsymbol{\omega}_{eb} \times (\boldsymbol{\omega}_{eb} \times \boldsymbol{l}_b)\big) + \boldsymbol{C}_b^e(\dot{\boldsymbol{\omega}}_{eb} \times \boldsymbol{l}_b) \tag{33}$$

Inserting the expressions for $\boldsymbol{v}_e(S)$ and $\dot{\boldsymbol{v}}_e(S)$ in the equation for $\boldsymbol{f}_b(S)$ gives

$$\boldsymbol{f}_b(S) = \boldsymbol{C}_e^b \Big( \dot{\boldsymbol{v}}_e + \boldsymbol{C}_b^e\big(\boldsymbol{\omega}_{eb} \times (\boldsymbol{\omega}_{eb} \times \boldsymbol{l}_b)\big) + \boldsymbol{C}_b^e(\dot{\boldsymbol{\omega}}_{eb} \times \boldsymbol{l}_b) - \boldsymbol{\gamma}_e(S)$$
$$+ 2\boldsymbol{\omega}_{ie} \times \boldsymbol{v}_e + 2\boldsymbol{\omega}_{ie} \times \boldsymbol{C}_b^e(\boldsymbol{\omega}_{eb} \times \boldsymbol{l}_b)\Big) \tag{34}$$

Inserting the navigation equation for the Earth frame velocity vector at navigation center $\dot{\boldsymbol{v}}_e$ and simplifying

$$\boldsymbol{f}_b(S) = \boldsymbol{f}_b + \boldsymbol{\omega}_{eb} \times (\boldsymbol{\omega}_{eb} \times \boldsymbol{l}_b) + \dot{\boldsymbol{\omega}}_{eb} \times \boldsymbol{l}_b + \boldsymbol{C}_e^b\boldsymbol{\gamma}_e - \boldsymbol{C}_e^b\boldsymbol{\gamma}_e(S)$$
$$+ 2\boldsymbol{\omega}_{ie}^b \times (\boldsymbol{\omega}_{eb} \times \boldsymbol{l}_b) \tag{35}$$

with the Earth rate vector in body frame coordinates $\boldsymbol{\omega}_{ie}^b$.

The cross-product terms can be simplified in a few steps as follows:

$$\boldsymbol{\omega}_{eb} \times (\boldsymbol{\omega}_{eb} \times \boldsymbol{l}_b) + 2\boldsymbol{\omega}_{ie}^b \times (\boldsymbol{\omega}_{eb} \times \boldsymbol{l}_b)$$
$$= \boldsymbol{\omega}_{ib} \times (\boldsymbol{\omega}_{eb} \times \boldsymbol{l}_b) + \boldsymbol{\omega}_{ie}^b \times (\boldsymbol{\omega}_{eb} \times \boldsymbol{l}_b) \tag{36}$$
$$= \boldsymbol{\omega}_{ib} \times (\boldsymbol{\omega}_{ib} \times \boldsymbol{l}_b) - \boldsymbol{\omega}_{ib} \times \big(\boldsymbol{\omega}_{ie}^b \times \boldsymbol{l}_b\big) + \boldsymbol{\omega}_{ie}^b \times (\boldsymbol{\omega}_{eb} \times \boldsymbol{l}_b)$$

with inertial angular rates vector $\omega_{ib}$.

The Jacobi identity gives

$$\boldsymbol{\omega}_{ie}^b \times (\boldsymbol{\omega}_{eb} \times \boldsymbol{l}_b) + \boldsymbol{\omega}_{eb} \times \big(\boldsymbol{l}_b \times \boldsymbol{\omega}_{ie}^b\big) + \boldsymbol{l}_b \times \big(\boldsymbol{\omega}_{ie}^b \times \boldsymbol{\omega}_{eb}\big) = 0 \tag{37}$$

Inserting this above

$$\boldsymbol{\omega}_{eb} \times (\boldsymbol{\omega}_{eb} \times \boldsymbol{l}_b) + 2\boldsymbol{\omega}_{ie}^b \times (\boldsymbol{\omega}_{eb} \times \boldsymbol{l}_b)$$
$$= \boldsymbol{\omega}_{ib} \times (\boldsymbol{\omega}_{ib} \times \boldsymbol{l}_b) - \boldsymbol{\omega}_{ib} \times \big(\boldsymbol{\omega}_{ie}^b \times \boldsymbol{l}_b\big) + \boldsymbol{\omega}_{eb} \times \big(\boldsymbol{\omega}_{ie}^b \times \boldsymbol{l}_b\big) \tag{38}$$
$$+ \big(\boldsymbol{\omega}_{ie}^b \times \boldsymbol{\omega}_{eb}\big) \times \boldsymbol{l}_b$$

And finally

$$\boldsymbol{\omega}_{eb} \times (\boldsymbol{\omega}_{eb} \times \boldsymbol{l}_b) + 2\boldsymbol{\omega}_{ie}^b \times (\boldsymbol{\omega}_{eb} \times \boldsymbol{l}_b)$$
$$= \boldsymbol{\omega}_{ib} \times (\boldsymbol{\omega}_{ib} \times \boldsymbol{l}_b) - \boldsymbol{\omega}_{ie}^b \times \big(\boldsymbol{\omega}_{ie}^b \times \boldsymbol{l}_b\big) + \big(\boldsymbol{\omega}_{ie}^b \times \boldsymbol{\omega}_{eb}\big) \times \boldsymbol{l}_b \tag{39}$$

Inserting this in the equation for $\boldsymbol{f}_b(S)$ gives

$$f_b(S) = f_b + \omega_{ib} \times (\omega_{ib} \times l_b) + \dot{\omega}_{eb} \times l_b + (\omega_{ie}^b \times \omega_{eb}) \times l_b + C_e^b \gamma_e$$
$$- C_e^b \gamma_e(S) - \omega_{ie}^b \times (\omega_{ie}^b \times l_b) \tag{40}$$

with

$$\dot{\omega}_{ib} = \frac{d}{dt}(C_e^b \omega_{ie} + \omega_{eb}) = C_e^b(\omega_{be} \times \omega_{ie}) + \dot{\omega}_{eb} = \omega_{ie}^b \times \omega_{eb} + \dot{\omega}_{eb} \tag{41}$$

And the difference of Earth gravitation vectors at the sensor location and the navigation center $\Delta g_{e,earth}$

$$\Delta g_{e,earth} = g_{e,earth}(S) - g_{e,earth}$$
$$= \gamma_e(S) + \omega_{ie} \times (\omega_{ie} \times x_e(S)) - \gamma_e - \omega_{ie} \times (\omega_{ie} \times x_e) \tag{42}$$

The expression for the body frame specific force vector at the sensor location $f_b(S)$ finally becomes:

$$f_b(S) = f_b + \omega_{ib} \times (\omega_{ib} \times l_b) + \dot{\omega}_{ib} \times l_b - C_e^b \Delta g_{e,earth} \tag{43}$$

C. Systems

Fig. 16 schematically illustrates, in accordance with one embodiment of the invention, a system 500a, comprising a device or a set of devices, for orientation estimation or at least for generating information based on which orientation estimation can be derived. System 500a comprises an IMU-based heading change information acquiring unit 520, a sensor-originating data acquiring unit 560, a determining unit 575, an additional heading change information acquiring unit 580, and an estimator-operating unit 540. IMU-based heading change information acquiring unit 520 is configured for acquiring data originating from an IMU 120 (not illustrated in Fig. 16) operated for providing information about heading change of a rigid body, the information being here referred to as "IMU-based heading change information". Sensor-originating data acquiring unit 560 is configured for acquiring data originating from a sensor 160 operated for at least intermittently providing one of: (i.1) information about heading of the rigid body, and (i.2) information usable, in combination with measurements from IMU 120, to estimate heading of the rigid body. Determining unit 575 is configured for determining whether a gyroscope 180, here referred to as "external gyroscope" 180, for providing further information about heading change of the rigid body is available and activated, wherein the further information is here referred to as "additional heading change information" and is provided as a data stream that need not be synchronized in time with the IMU-based heading change information. Additional heading change information acquiring unit 580 is configured for acquiring the additional heading change information originating from external gyroscope 180 if external gyroscope 180 is available and activated. Finally, estimator-operating unit 540 is configured for operating an estimation process 140, here referred to as "estimator" 140, wherein estimator 140 uses state variables, and estimator 140 computes the values of its state variables based on (a) the IMU-based heading change information; (b.1) data from sensor 160; and (c), if external gyroscope 180 is available and activated, on the additional heading change information.

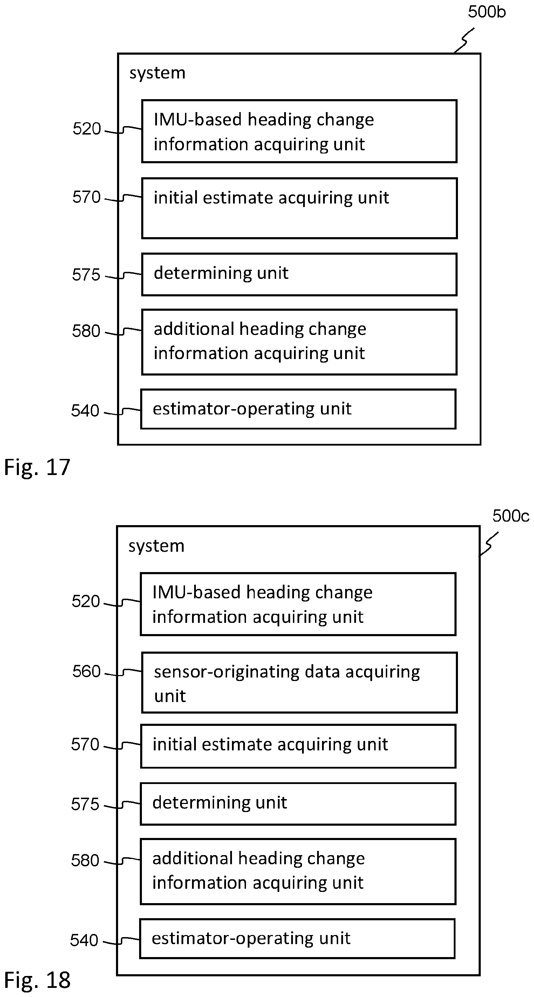

Fig. 17 schematically illustrates, in accordance with one embodiment of the invention, a system 500b, which differs from the system of Fig. 16 in that, instead of comprising a sensor-originating data acquiring unit 560, system 500b comprises an initial estimate acquiring unit 570. Initial estimate acquiring unit 570 is configured for acquiring an initial estimate 170 of one of: (ii.1) heading of the rigid body, and (ii.2) a parameter or parameters usable, in combination with measurements from IMU 120, to estimate heading of the rigid body. Correspondingly, estimator 140 computes the values of its state variables based on (a) the IMU-based heading change information; (b.2) initial estimate 170; and (c), if external gyroscope 180 is available and activated, on the additional heading change information.

Fig. 18 schematically illustrates, in accordance with one embodiment of the invention, a system 500c which combines the features of system 500a of Fig. 16 and system 500b of Fig. 17.

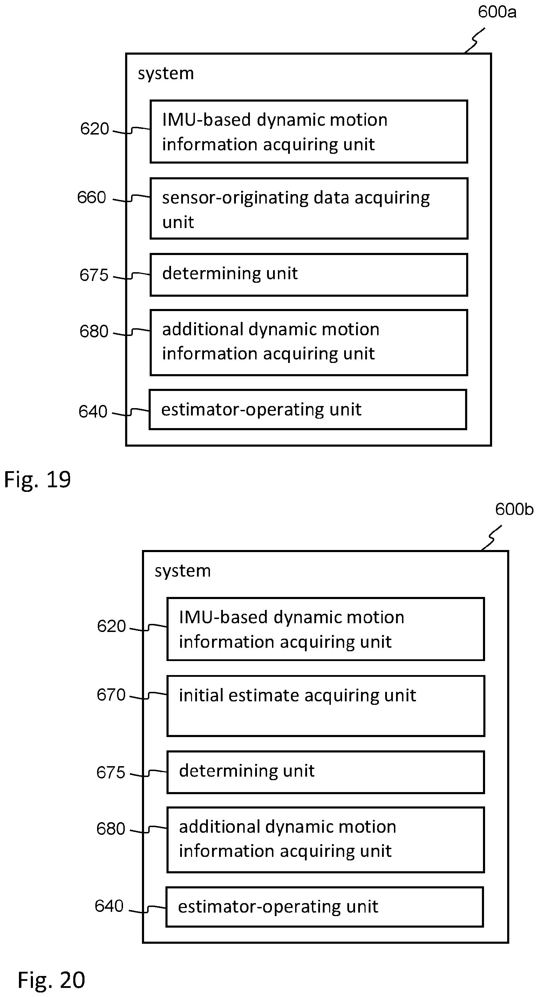

Fig. 19 schematically illustrates, in accordance with one embodiment of the invention, a system 600a, comprising a device or a set of devices, for pose parameters estimation or at least for generating information based on which pose parameters estimation can be derived. The pose parameters comprise at least one of: (a) a position of a point of a rigid body or of a point being at a fixed position with respect to the rigid body; and (b) an orientation of a frame fixedly attached to the rigid body. System 600a comprises an IMU-based dynamic motion information acquiring unit 620, a sensor-originating data acquiring unit 660, a determining unit 675, an additional dynamic motion information acquiring unit 680, and an estimator-operating unit 640. IMU-based dynamic motion information acquiring unit 620 is configured for acquiring data originating from an IMU 220 operated for providing information about a dynamic motion of the rigid body, the information being here referred to as "IMU-based dynamic motion information". Sensor-originating data acquiring unit 660 is configured for acquiring data originating from a sensor 260 operated for at least intermittently providing one of: (i.1) information about pose parameters of the rigid body relative to a reference system that is not attached to the rigid body, and (i.2) information usable, in combination with measurements from IMU 220 to estimate pose parameters of the rigid body relative to a reference system that is not attached to the rigid body. Determining unit 675 is configured for determining whether an accelerometer 280, here referred to as "external accelerometer" 280, for providing further information about a dynamic motion of the rigid body is available and activated, wherein the further information is here referred to as "additional dynamic motion information" and is provided as a data stream that need not be synchronized in time with the IMU-based dynamic motion information. Additional dynamic motion information acquiring unit 680 is configured for acquiring the additional dynamic motion information originating from external accelerometer 280 if external accelerometer 280 is available and activated. Estimator-operating unit 640 is configured for operating an estimation process 240, here referred to as "estimator" 240, wherein estimator 240 uses state variables and computes the values of its state variables based on (a) the IMU-based dynamic motion information, (b.1) data from sensor 260, and (c) if external accelerometer 280 is available and activated, on the additional dynamic motion information.

Fig. 20 schematically illustrates, in accordance with one embodiment of the invention, a system 600b, which differs from the system of Fig. 19 in that, instead of comprising a sensor-originating data acquiring unit 660, system 600b comprises an initial estimate acquiring unit 670. Initial estimate acquiring unit 670 is configured for acquiring an initial estimate 270 of one of: (ii.1) pose parameters of the rigid body relative to a reference system that is not attached to the rigid body, and (ii.2) a parameter or parameters usable, in combination with measurements from IMU 220, to estimate pose of the rigid body relative to a reference system that is not attached to the rigid body. Correspondingly, estimator 240 computes the values of its state variables based on (a) the IMU-based dynamic motion information, (b.2) initial estimate 270, and (c), if external accelerometer 280 is available and activated, on the additional dynamic motion information.

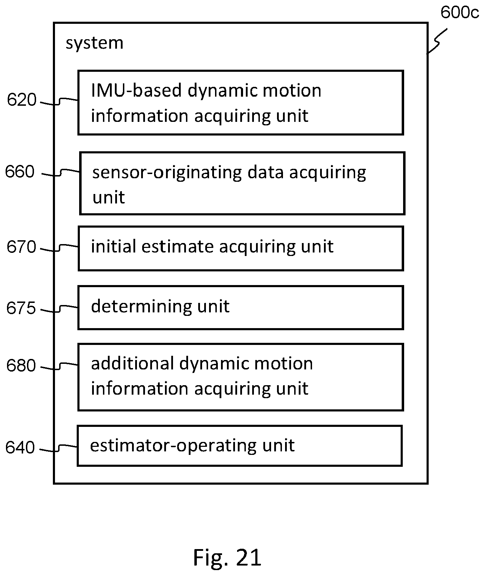

Fig. 21 schematically illustrates, in accordance with one embodiment of the invention, a system 600c, which combines the features of system 600a of Fig. 19 and system 600b of Fig. 20.

In one embodiment, system 500a, 500b, 500c, 600a, 600b, 600c comprises a connector, such as a wired connector, which may be a USB connector, an Ethernet connector, a DB9 connector, a LEMO connector, or any other type of wired connector, and/or such as a connector to establish a wireless connection, in accordance with any wireless protocol, for example Bluetooth, WiFi, Li-Fi, or any other type of wireless protocol, for allowing external gyroscope 180 and/or external accelerometer 280 to be connected to the system. The connector may for example be arranged through the exterior housing and may be visible when looking at the system's housing from the outside. Alternatively, the connector may be arranged inside the housing, e.g. to establish a wireless connection. The term "connector" here refers to any module, unit, adapter, port, or the like to physically link two components via e.g. cables or ports, and/or to an interface that enables devices to communicate without direct physical connections.

In one embodiment, a vehicle comprises a system 500a, 500b, 500c, 600a, 600b, 600c as described above. The vehicle may for example be an autonomous vehicle such as a self-driving vehicle, a driverless vehicle, a robotic vehicle, a highly automated vehicle, a partially automated vehicle, an aircraft, or an unmanned aerial vehicle. Alternatively or additionally, the vehicle may for example be at least one of (the list of possibilities is not meant to be exhaustive): a motor vehicle, a car, a truck, a bus, a train, a motorcycle, a tractor, an agricultural equipment, an agricultural tractor, a combine harvester, a crop sprayer, a forestry equipment, a construction equipment, and a grader. Examples of applications may include machine guidance, construction work, operation of unmanned aerial vehicles (UAV), also known as drones, and operation of unmanned surface vehicles/vessels (USV).

In one embodiment, IMU 120, 220 is provided in the vehicle and system 500a, 500b, 500c, 600a, 600b, 600c, although capable of receiving data from IMU 120, 220, does not comprise IMU 120, 220. In other words, IMU 120, 220 can be external to system 500a, 500b, 500c, 600a, 600b, 600c.

In one embodiment, a survey pole comprises a system 500a, 500b, 500c, 600a, 600b, 600c as described above. The survey pole may for example be a telescopic survey pole.

D. Additional remarks

Any of the above-described methods and their embodiments may be implemented, at least partially, by means of a computer program or a set of computer programs. The computer program(s) may be loaded on an apparatus, such as for example an AINS device, an NSS receiver (running on a rover station, on a moving reference station, or within a vehicle) or a server (which may comprise one or a plurality of computers). Therefore, the invention also relates, in some embodiments, to a computer program or set of computer programs, which, when carried out on an apparatus as described above, such as for example an AINS device, an NSS receiver (running on a rover station, on a moving reference station, or within a vehicle) or a server, carries out any one of the above-described methods and their embodiments.

The invention also relates, in some embodiments, to a computer-readable medium, a machine-readable medium, or a computer-program product including the above-mentioned computer program. The computer-readable medium, machine-readable medium, or computer-program product may for instance be a magnetic tape, an optical memory disk, a magnetic disk, a magneto-optical disk, an SSD, a CD-ROM, a DVD, a CD, a flash memory unit, a hard drive, or other storage devices, wherein the computer program is permanently, non-transitorily, or temporarily stored. In some embodiments, a computer-readable medium (or to a computer-program product) has computer-executable instructions for carrying out any one of the methods of the invention.

In one embodiment, a computer program as claimed may be delivered to the field as a computer program product, for example through a firmware or software update to be installed on devices and/or receivers already in the field. This applies to each of the above-described methods and apparatuses.

As mentioned above, a NSS receiver comprises one or a plurality of antennas configured to receive NSS signals at the frequencies broadcasted by the NSS satellites, and a NSS receiver may further comprise processor units, one or a plurality of accurate clocks (such as crystal oscillators), one or a plurality of central processing units (CPU), one or a plurality of memory units (RAM, ROM, flash memory, or the like), and a display for displaying position information to a user.

Where the terms "IMU-based heading change information acquiring unit", "sensor-originating data acquiring unit", "determining unit", "additional heading change information acquiring unit", etc. are used herein as units (or sub-units) of an apparatus or system, no restriction is made regarding how distributed the constituent parts of a unit (or sub-unit) may be. That is, the constituent parts of a unit (or sub-unit) may be distributed in different software and/or hardware components or devices for bringing about the intended function. Further, the units may be gathered together for performing their functions by means of a combined, single unit (or sub-unit).

Some of the above-mentioned units and sub-units may be implemented at least in part using hardware, software, a combination of hardware and software, pre-programmed application-specific integrated circuit (ASICs), etc. A unit may include a CPU, a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

Abbreviations:

| | |
|---|---|
| 1D | one-dimensional |
| 2D | two-dimensional |
| 3D | three-dimensional |
| accel | accelerometer |
| AINS | aided inertial navigation system |
| APC | antenna phase center |
| ARW | angle random walk |
| ASIC | application-specific integrated circuit |
| BLE | Bluetooth low energy (see Fig. 13) |
| CAD | computer-aided design |
| CD | compact disc |
| CD-ROM | compact disk read-only memory |
| const. | constant (see e.g. equation (32)) |
| CPU | central processing unit |
| DCM | direction cosine matrix |
| DVD | digital versatile disc |
| ECEF | Earth-centered, Earth-fixed (coordinate system) |
| ECI | Earth-centered inertial |
| est | estimator |
| GNSS | global navigation satellite system |
| GPS | Global Positioning System |
| gyro | gyroscope |
| H.O.T. | higher-order terms (see e.g. equation (25)) |
| I/O | input/output |
| IMU | inertial measurement unit |
| INS | inertial navigation system |

| LEO-PNT | Low Earth Orbit-Positioning, Navigation and Timing |
| MEMS | micro-electromechanical system |
| MEO-PNT | Medium Earth Orbit-Positioning, Navigation, and Timing |
| NSS | navigation satellite system |
| PRN | pseudo-random noise |
| RAM | random-access memory |
| ref. | reference |
| refs. | references |
| RHS | right-hand side |
| RNSS | regional navigation satellite system |
| ROM | read-only memory |
| RTK | real-time kinematic |
| RTS | robotic total station |
| SSD | solid-state disk |
| UAV | unmanned aerial vehicle |
| USB | Universal Serial Bus |
| USV | unmanned surface vehicle/vessel |
| $\mu$C | microcontroller (see Fig. 13) |

References:

[1] Jan Van Sickle, "Two Types of Observables | GEOG 862: GPS and GNSS for Geospatial Professionals", John A. Dutton e-Education Institute, College of Earth and Mineral Sciences, The Pennsylvania State University, retrieved from https://www.e-education.psu.edu/geog862/node/1752 on November 8, 2021.
[2] Groves, Paul D. (2008), "Principles of GNSS, Inertial, and Multisensor Integrated Navigation Systems", Artech House, ISBN 978-1-58053-255-6.
[3] EP 3 035 080 A1 titled "Navigation satellite system positioning involving the generation of correction information" (Trimble ref.: A4396).
[4] EP 3 130 943 A1 titled "Navigation satellite system positioning involving the generation of tropospheric correction information" (Trimble ref.: 15072-EPO).
[5] Hofmann-Wellenhof, B., et al., "GNSS, Global Navigation Satellite Systems, GPS, GLONASS, Galileo, & more", Springer-Verlag Wien, 2008.
[6] Bruce P. Gibbs, "Advanced Kalman Filtering, Least-Squares and Modeling", John Wiley & Sons, Inc., 2011.
[7] Anthony Lawrence, "Modern Inertial Technology: Navigation, Guidance, and Control", 2nd Ed., Springer 2001.

**Claims**

1. Method for orientation estimation or at least for generating information based on which orientation estimation can be derived, the method comprising:

   operating (s10) an inertial measurement unit (120), hereinafter referred to as "IMU" (120), for providing information about heading change of a rigid body, the information being hereinafter referred to as "IMU-based heading change information";
   at least one of:

      operating (s20a) a sensor (160) for at least intermittently providing one of:

         information about heading of the rigid body, and
         information usable, in combination with measurements from the IMU (120), to estimate heading of the rigid body; and

      acquiring (s20b) an initial estimate (170) of one of:

         heading of the rigid body, and
         a parameter or parameters usable, in combination with measurements from the IMU (120), to estimate heading of the rigid body;

determining (s30) whether a gyroscope (180), hereinafter referred to as "external gyroscope" (180), for providing further information about heading change of the rigid body is available and activated, wherein the further information is hereinafter referred to as "additional heading change information" and is provided as a data stream that need not be synchronized in time with the IMU-based heading change information;
operating (s40) the external gyroscope (180) if available and activated; and
operating (s50a, s50b, s50c) an estimation process (140), hereinafter referred to as "estimator" (140), wherein the estimator (140) uses state variables, and the estimator (140) computes the values of its state variables based on

the IMU-based heading change information; at least one of:
data from the sensor (160), and
the initial estimate (170); and,

if the external gyroscope (180) is available and activated, on the additional heading change information.

2. Method of claim 1, wherein the method comprises operating (s20a) the sensor (160), and the sensor (160) comprises at least one of:

a dual-antenna navigation satellite system, hereinafter abbreviated as "NSS", receiver; and
a NSS receiver with a single antenna.

3. Method of claim 1 or 2, wherein the estimator (140) comprises at least one of a Kalman filter, an unscented Kalman filter, a particle filter, and a least squares estimator.

4. Method according to any one of the preceding claims, wherein the estimator (140) computes the values of its state variables by computing time updates of the state variables based on

the IMU-based heading change information;
at least one of:

measurement updates from the sensor (160), and
the initial estimate (170); and,

if the external gyroscope (180) is available and activated, on the additional heading change information.

5. Method according to any one of the preceding claims, wherein the estimator (140) integrates over time an angular rate about an axis of the external gyroscope (180).

6. Method according to any one of the preceding claims, wherein the IMU (120) and the external gyroscope (180) are attached to different rigid bodies, and the method further comprises monitoring a relative orientation of the IMU (120) and the external gyroscope (180).

7. Method for pose parameters estimation or at least for generating information based on which pose parameters estimation can be derived, wherein the pose parameters comprise at least one of:

a position of a point of a rigid body or of a point being at a fixed position with respect to the rigid body; and
an orientation of a frame fixedly attached to the rigid body, the method comprising:

operating (s60) an inertial measurement unit (220), hereinafter referred to as "IMU" (220), for providing information about a dynamic motion of the rigid body, the information being hereinafter referred to as "IMU-based dynamic motion information";
at least one of:

operating (s70a) a sensor (260) for at least intermittently providing one of:

information about pose parameters of the rigid body relative to a reference system that is not attached to the rigid body, and

information usable, in combination with measurements from the IMU (220), to estimate pose parameters of the rigid body relative to a reference system that is not attached to the rigid body; and

acquiring (s70b) an initial estimate (270) of one of:

pose parameters of the rigid body relative to a reference system that is not attached to the rigid body, and

a parameter or parameters usable, in combination with measurements from the IMU (220), to estimate pose of the rigid body relative to a reference system that is not attached to the rigid body;

determining (s80) whether an accelerometer (280), hereinafter referred to as "external accelerometer" (280), for providing further information about a dynamic motion of the rigid body is available and activated, wherein the further information is hereinafter referred to as "additional dynamic motion information" and is provided as a data stream that need not be synchronized in time with the IMU-based dynamic motion information;

operating (s90) the external accelerometer (280) if available and activated; and

operating (s100a, s100b, s100c) an estimation process (240), hereinafter referred to as "estimator" (240), wherein the estimator (240) uses state variables, and the estimator (240) computes the values of its state variables based on

the IMU-based dynamic motion information;

at least one of:

data from the sensor (260), and

the initial estimate (270); and,

if the external accelerometer (280) is available and activated, on the additional dynamic motion information.

8. Method of claim 7, wherein the method comprises operating (s70a) the sensor (260), and the sensor (260) comprises at least one of:

a dual-antenna navigation satellite system, hereinafter abbreviated as "NSS", receiver; and

a NSS receiver with a single antenna.

9. Method of claim 7 or 8, wherein the estimator (240) comprises at least one of a Kalman filter, an unscented Kalman filter, a particle filter, and a least squares estimator.

10. Method according to any one of claims 7 to 9, wherein the estimator (240) computes the values of its state variables by computing time updates of the state variables based on

the IMU-based dynamic motion information;

at least one of:

measurement updates from the sensor (260), and

the initial estimate (270); and,

if the external accelerometer (280) is available and activated, on the additional dynamic motion information.

11. Method according to any one of claims 7 to 10, wherein the estimator (240) integrates over time accelerometer measurements along an axis of the external accelerometer (280).

12. Method according to any one of claims 7 to 11, wherein the IMU (220) and the external accelerometer (280) are attached to different rigid bodies, and the method further comprises monitoring at least one of element A and element B, wherein

element A comprises an orientation and a lever arm of the external accelerometer (280) relative to the IMU (220); and

element B comprises a distance from the external accelerometer (280) to the IMU (220).

13. Method according to any one of claims 7 to 12, wherein the rigid body is one of:

> a part of a telescopic survey pole; and
> a survey pole.

14. Method of claim 13, wherein

> the rigid body is a part of a telescopic survey pole,
> the IMU (220) and the external accelerometer (280) are attached respectively to two different parts of the telescopic survey pole that are movable with respect to each other; and
> the method further comprises outputting an estimate of the telescopic survey pole's height.

15. Method of claim 13, wherein

> the rigid body is a survey pole;
> a survey receiver is rigidly attached to the survey pole;
> an axis, hereinafter referred to as "survey pole's axis", is defined as passing through a center of mounting of the survey receiver on the survey pole and through the survey pole's tip; and
> the method further comprises at least one of:
>
> > outputting an estimation of misalignment of the survey pole's axis with respect to an internal frame of the survey receiver; and
> > outputting an estimation of a position of the survey pole's tip.

16. Method of claim 15, wherein the method comprises calibrating the external accelerometer (280) through a procedure comprising:

> mounting the survey pole (1503) between two fixtures (1501, 1502); and
> rotating the survey pole (1503) about the survey pole's axis, wherein, preferably, rotating is performed (i) manually, (ii) in a partially automated and partially manual manner, or (iii) in an automated manner.

17. System (500a, 500b, 500c), comprising a device or a set of devices, for orientation estimation or at least for generating information based on which orientation estimation can be derived, the system (500a, 500b, 500c) being configured for:

> acquiring data originating from an inertial measurement unit (120), hereinafter referred to as "IMU" (120), operated for providing information about heading change of a rigid body, the information being hereinafter referred to as "IMU-based heading change information";
> at least one of:
>
> > acquiring data originating from a sensor (160) operated for at least intermittently providing one of:
> >
> > > information about heading of the rigid body, and
> > > information usable, in combination with measurements from the IMU (120), to estimate heading of the rigid body; and
> >
> > acquiring an initial estimate (170) of one of:
> >
> > > heading of the rigid body, and
> > > a parameter or parameters usable, in combination with measurements from the IMU (120), to estimate heading of the rigid body;
>
> determining whether a gyroscope (180), hereinafter referred to as "external gyroscope" (180), for providing further information about heading change of the rigid body is available and activated, wherein the further information is hereinafter referred to as "additional heading change information" and is provided as a data stream that need not be synchronized in time with the IMU-based heading change information;
> acquiring the additional heading change information originating from the external gyroscope (180) if the external gyroscope (180) is available and activated; and
operating an estimation process (140), hereinafter referred to as "estimator" (140), wherein the estimator (140) uses state variables, and the estimator (140) computes the values of its state variables based on

the IMU-based heading change information;
at least one of:

data from the sensor (160), and
the initial estimate (170); and,
if the external gyroscope (180) is available and activated, on the additional heading change information.

18. System (600a, 600b, 600c), comprising a device or a set of devices, for pose parameters estimation or at least for generating information based on which pose parameters estimation can be derived, wherein the pose parameters comprise at least one of:

a position of a point of a rigid body or of a point being at a fixed position with respect to the rigid body; and
an orientation of a frame fixedly attached to the rigid body, the system (600a, 600b, 600c) being configured for:

acquiring data originating from an inertial measurement unit (220), hereinafter referred to as "IMU" (220), operated for providing information about a dynamic motion of the rigid body, the information being hereinafter referred to as "IMU-based dynamic motion information";
at least one of:

acquiring data originating from a sensor (260) operated for at least intermittently providing one of:

information about pose parameters of the rigid body relative to a reference system that is not attached to the rigid body, and
information usable, in combination with measurements from the IMU (220), to estimate pose parameters of the rigid body relative to a reference system that is not attached to the rigid body; and

acquiring an initial estimate (270) of one of:

pose parameters of the rigid body relative to a reference system that is not attached to the rigid body, and
a parameter or parameters usable, in combination with measurements from the IMU (220), to estimate pose of the rigid body relative to a reference system that is not attached to the rigid body;

determining whether an accelerometer (280), hereinafter referred to as "external accelerometer" (280), for providing further information about a dynamic motion of the rigid body is available and activated, wherein the further information is hereinafter referred to as "additional dynamic motion information" and is provided as a data stream that need not be synchronized in time with the IMU-based dynamic motion information;
acquiring the additional dynamic motion information originating from the external accelerometer (280) if the external accelerometer (280) is available and activated; and
operating an estimation process (240), hereinafter referred to as "estimator" (240), wherein the estimator (240) uses state variables, and the estimator (240) computes the values of its state variables based on

the IMU-based dynamic motion information;
at least one of:

data from the sensor (260), and
the initial estimate (270); and,

if the external accelerometer (280) is available and activated, on the additional dynamic motion information.

19. System (500a, 500b, 500c, 600a, 600b, 600c) of claim 17 or 18, further comprising a connector to allow the external gyroscope (180) and/or the external accelerometer (280) to be connected to the system (500a, 500b, 500c, 600a, 600b, 600c), wherein, preferably, the connector is to establish a wired connection and/or is to establish a wireless connection.

20. Vehicle comprising a system (500a, 500b, 500c, 600a, 600b, 600c) according to any one of claims 17 to 19, the vehicle preferably being at least one of: a motor vehicle, an agricultural equipment, an agricultural tractor, a combine harvester, a crop sprayer, a forestry equipment, a construction equipment, a truck, a bus, a train, a motorcycle, an autonomous vehicle, a self-driving vehicle, a driverless vehicle, a robotic vehicle, a highly automated vehicle, an aircraft, and an unmanned aerial vehicle.

21. Survey pole comprising a system (500a, 500b, 500c, 600a, 600b, 600c) according to any one of claims 17 to 19, the survey pole preferably being a telescopic survey pole.

22. Computer program, or set of computer programs, comprising computer- and/or machine-readable instructions configured, when executed on a system (500a, 500b, 500c, 600a, 600b, 600c) according to any one of claims 17 to 19, to cause the system to carry out the operations that the system is configured to carry out.

23. Computer program product or storage mediums comprise a computer program, or set of computer programs, according to claim 22.

Fig. 1a

Fig. 1b

120

IMU

140

estimator

170

initial
estimate

180

external
gyroscope

Fig. 2a

120

IMU

140

estimator

170

initial
estimate

180

external
gyroscope

Fig. 2b

Fig. 3a

Fig. 3b

s10

| operating an IMU for providing information about heading change of a rigid body, the information being here referred to as "IMU-based heading change information" |

| operating a sensor for at least intermittently providing one of: (i.1) information about heading of the rigid body, and (i.2) information usable, in combination with measurements from the IMU, to estimate heading of the rigid body |

s30

| determining whether an external gyroscope for providing additional heading change information is available and activated |

s40

| operating the external gyroscope if available and activated |

s50a

| operating an estimator computing the values of its state variables based on (a) the IMU-based heading change information; (b.1) data from the sensor; and (c) if the external gyroscope is available and activated, the additional heading change information |

EP 4 764 405 A1

Fig. 4

EP 4 764 405 A1

s10

```
operating an IMU for
providing information
about heading change of a
rigid body, the information
being here referred to as
"IMU-based heading
change information"
```

s20b

```
acquiring an initial estimate
of one of: (ii.1) heading of
the rigid body, and (ii.2) a
parameter or parameters
usable, in combination with
measurements from the IMU,
to estimate heading of the
rigid body
```

s30

```
determining whether an
external gyroscope for
providing additional heading
change information is
available and activated
```

s40

```
operating the external
gyroscope if available and
activated
```

s50b

```
operating an estimator computing the values of its state
variables based on (a) the IMU-based heading change
information; (b.2) the initial estimate; and (c) if the
external gyroscope is available and activated, the
additional heading change information
```

Fig. 5

**s10**
operating an IMU for providing information about heading change of a rigid body, the information being here referred to as "IMU-based heading change information"

**s20a**
operating a sensor for at least intermittently providing one of: (i.1) information about heading of the rigid body, and (i.2) information usable, in combination with measurements from the IMU, to estimate heading of the rigid body

**s20b**
acquiring an initial estimate of one of: (ii.1) heading of the rigid body, and (ii.2) a parameter or parameters usable, in combination with measurements from the IMU, to estimate heading of the rigid body

**s30**
determining whether an external gyroscope for providing additional heading change information is available and activated

**s40**
operating the external gyroscope if available and activated

**s50c**
operating an estimator computing the values of its state variables based on (a) the IMU-based heading change information; (b.1) data from the sensor; (b.2) the initial estimate; and (c) if the external gyroscope is available and activated, the additional heading change information

Fig. 6

EP 4 764 405 A1

220

IMU

240

estimator

260

sensor

280

external
accelerometer

Fig. 7a

220

IMU

240

estimator

260

sensor

280

external
accelerometer

Fig. 7b

Fig. 8a

Fig. 8b

Fig. 9a

Fig. 9b

s60 — operating an IMU for providing information about a dynamic motion of a rigid body, the information being here referred to as "IMU-based dynamic motion information"

s70a — operating a sensor for at least intermittently providing one of: (i.1) information about pose parameters of the rigid body, and (i.2) information usable, in combination with measurements from the IMU, to estimate pose parameters of the rigid body

s80 — determining whether an external accelerometer for providing additional dynamic motion information is available and activated

s90 — operating the external accelerometer if available and activated

s100a — operating an estimator computing the values of its state variables based on (a) the IMU-based dynamic motion information; (b.1) data from the sensor; and (c) if the external accelerometer is available and activated, the additional dynamic motion information

Fig. 10

EP 4 764 405 A1

EP 4 764 405 A1

```
                                           s70b
  s60                              ┌──────────────────────────┐   s80
┌──────────────────────┐          │   acquiring an initial       │        ┌──────────────────────────┐
│  operating an IMU for  │          │     estimate of one of: (ii.1)   │        │  determining whether an   │
│  providing information │          │  pose parameters of the      │        │  external accelerometer for │
│  about a dynamic motion│          │  rigid body, and (ii.2) a       │        │  providing additional dynamic│
│  of a rigid body, the   │          │  parameter or parameters     │        │  motion information is      │
│  information being here │          │  usable, in combination with │        │  available and activated     │
│  referred to as "IMU-based│        │  measurements from the IMU,  │        └──────────────────────────┘
│  dynamic motion        │          │  to estimate pose of the rigid │                     │
│  information"           │          │          body                   │    s90              ▼
└──────────────────────┘          └──────────────────────────┘   ┌──────────────────────────┐
              │                                   │                     │  operating the external     │
              │                                   │                     │  accelerometer if available  │
              │                                   │                     │  and activated              │
              │                                   │                     └──────────────────────────┘
              └──────────────┐                    │                                    │
                             ▼                    ▼                                    ▼
        s100b    ┌───────────────────────────────────────────────────────────┐
                 │  operating an estimator computing the values of its state       │
                 │  variables based on (a) the IMU-based dynamic motion          │
                 │  information; (b.2) the initial estimate; and (c) if the          │
                 │  external accelerometer is available and activated, the          │
                 │  additional dynamic motion information                          │
                 └───────────────────────────────────────────────────────────┘
```

Fig. 11

s80 — determining whether an external accelerometer for providing additional dynamic motion information is available and activated

s90 — operating the external accelerometer if available and activated

s70b — acquiring an initial estimate of one of: (ii.1) pose parameters of the rigid body, and (ii.2) a parameter or parameters usable, in combination with measurements from the IMU, to estimate pose of the rigid body

s70a — operating a sensor for at least intermittently providing one of: (i.1) information about pose parameters of the rigid body, and (i.2) information usable, in combination with measurements from the IMU, to estimate pose parameters of the rigid body

s60 — operating an IMU for providing information about a dynamic motion of a rigid body, the information being here referred to as "IMU-based dynamic motion information"

s100c — operating an estimator computing the values of its state variables based on (a) the IMU-based dynamic motion information; (b.1) data from the sensor; (b.2) the initial estimate; and (c) if the external accelerometer is available and activated, the additional dynamic motion information

Fig. 12

Auto height for telescopic survey pole

battery

1, 2, or 3-axis accel.

μC

wireless capabilities (e.g., BLE)

280

push button

BLE

1.25 m

2.10 m

Fig. 13

EP 4 764 405 A1

## Survey pole misalignment estimation (3-axis accel)

BLE

280

calibrated
measurement axis,
precisely aligned with
pole vector

- Estimate the misalignment of
  internal IMU frame and
  external measurement axis

Fig. 14

EP 4 764 405 A1

Calibration on the pole (3-axis accel to 1D signal)

1501     sensor     1503     manual     1502
         axes                  rotation

gravity

Fig. 15

500a

system

520 — IMU-based heading change information acquiring unit

560 — sensor-originating data acquiring unit

575 — determining unit

580 — additional heading change information acquiring unit

540 — estimator-operating unit

Fig. 16

500b

system

520 — IMU-based heading change information acquiring unit

570 — initial estimate acquiring unit

575 — determining unit

580 — additional heading change information acquiring unit

540 — estimator-operating unit

Fig. 17

500c

system

520 — IMU-based heading change information acquiring unit

560 — sensor-originating data acquiring unit

570 — initial estimate acquiring unit

575 — determining unit

580 — additional heading change information acquiring unit

540 — estimator-operating unit

Fig. 18

600a

system

| | IMU-based dynamic motion information acquiring unit |

620 — IMU-based dynamic motion information acquiring unit

660 — sensor-originating data acquiring unit

675 — determining unit

680 — additional dynamic motion information acquiring unit

640 — estimator-operating unit

Fig. 19

600b

system

620 — IMU-based dynamic motion information acquiring unit

670 — initial estimate acquiring unit

675 — determining unit

680 — additional dynamic motion information acquiring unit

640 — estimator-operating unit

Fig. 20

600c

system

| 620 | IMU-based dynamic motion information acquiring unit |

| 660 | sensor-originating data acquiring unit |

| 670 | initial estimate acquiring unit |

| 675 | determining unit |

| 680 | additional dynamic motion information acquiring unit |

| 640 | estimator-operating unit |

Fig. 21

Europäisches
Patentamt

European
Patent Office

Office européen
des brevets

# EUROPEAN SEARCH REPORT

**Application Number**

EP 24 22 0500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BINGBING LIU ET AL: "Multi-aided Inertial Navigation for Ground Vehicles in Outdoor Uneven Environments", ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18 April 2005 (2005-04-18), pages 4703-4708, XP010875322, DOI: 10.1109/ROBOT.2005.1570846 ISBN: 978-0-7803-8914-4 * Abstract, chapters I, III, IV, VI, figs. 1-3 * | 1-6,17, 19-23 | INV. G01C15/06 G01C21/16 G01C25/00 |
| A | US 10 066 367 B1 (WANG LIANG [US] ET AL) 4 September 2018 (2018-09-04) * Col. 1, 1.7-15, col.5, 1.18-50, col.9, 1.25-39, col.13, 1.18-64, col.15, 1.25-67, figs. 1, 6, 8 * | 1-6,17, 19-23 | |
| X | EP 4 296 435 A1 (LEICA GEOSYSTEMS TECH A/S [DK]) 27 December 2023 (2023-12-27) * paragraphs [0001], [0007], [0010] - [0011], [0024], [0034], [0045] - [0046] * * figures 1-3 * | 7-16, 18-23 | TECHNICAL FIELDS SEARCHED (IPC) G01C |
| A | EP 2 722 647 A1 (LEICA GEOSYSTEMS AG [CH]) 23 April 2014 (2014-04-23) * paragraphs [0001], [0003], [0025], [0027], [0033] - [0034], [0049], [0052], [0110] - [0111] * * figure 2 * | 15,16 | |

The present search report has been drawn up for all claims

| Place of search | Date of completion of the search | Examiner |
|---|---|---|
| The Hague | 27 June 2025 | Eitner, Christian |

EPO FORM 1503 03.82 (P04C01)

Europäisches
Patentamt

European
Patent Office

Office européen
des brevets

**Application Number**

**EP 24 22 0500**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

EP 24 22 0500

The Search Division considers that the present European patent application does not comply with the
requirements of unity of invention and relates to several inventions or groups of inventions, namely:

        1. claims: 1-6, 17(completely); 19-23(partially)

            Heading estimation for vehicle
                        ---


        2. claims: 7-16, 18(completely); 19-23(partially)

            Height estimation for telescopic survey pole
                        ---

## ANNEX TO THE EUROPEAN SEARCH REPORT
## ON EUROPEAN PATENT APPLICATION NO.

EP 24 22 0500

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2025

| Patent document cited in search report | | Publication date | Patent family member(s) | | Publication date |
|---|---|---|---|---|---|
| US 10066367 | B1 | 04-09-2018 | NONE | | |
| EP 4296435 | A1 | 27-12-2023 | CN | 117268321 A | 22-12-2023 |
| | | | EP | 4296435 A1 | 27-12-2023 |
| | | | US | 2023417025 A1 | 28-12-2023 |
| EP 2722647 | A1 | 23-04-2014 | BR | 112015008424 A2 | 04-07-2017 |
| | | | CN | 104736963 A | 24-06-2015 |
| | | | EP | 2722647 A1 | 23-04-2014 |
| | | | EP | 2909579 A1 | 26-08-2015 |
| | | | US | 2015268045 A1 | 24-09-2015 |
| | | | WO | 2014060429 A1 | 24-04-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3035080 A1

- EP 3130943 A1

**Non-patent literature cited in the description**

- **JAN VAN SICKLE**. Two Types of Observables | GEOG 862: GPS and GNSS for Geospatial Professionals. The Pennsylvania State University, 08 November 2021
- **GROVES** ; **PAUL D.** Principles of GNSS, Inertial, and Multisensor Integrated Navigation Systems. Artech House, 2008

- **HOFMANN-WELLENHOF, B. et al.** GNSS, Global Navigation Satellite Systems, GPS, GLONASS, Galileo, & more. Springer-Verlag, 2008
- **BRUCE P. GIBBS**. Advanced Kalman Filtering, Least-Squares and Modeling. John Wiley & Sons, Inc., 2011
- **ANTHONY LAWRENCE**. Modern Inertial Technology: Navigation, Guidance, and Control. Springer, 2001